Europäisches Patentamt

European Patent Office

Office européen des brevets

(19)

(11) EP 0 790 557 A2

(12) EUROPEAN PATENT APPLICATION

(43) Date of publication:
20.08.1997 Bulletin 1997/34

(51) Int Cl.⁶: G06F 9/46

(21) Application number: 97300951.7

(22) Date of filing: 14.02.1997

(84) Designated Contracting States:
DE FR GB

(30) Priority: 14.02.1996 JP 26742/96

(71) Applicant: MATSUSHITA ELECTRIC INDUSTRIAL
CO., LTD.
Kadoma-shi, Osaka-fu, 571 (JP)

(72) Inventors:
• Waki, Hiroyuki
  Hirakata-shi, Osaka-fu 573 (JP)
• Inoue, Shinji
  Neyagawa-shi, Osaka-fu 572 (JP)

• Hayama, Satoru
  Kobe-shi, Hyogo-ken 658 (JP)
• Fujita, Mitsuko
  Hirakata-shi, Osaka-fu 573 (JP)
• Ishikawa, Akira
  Osaka-shi, Osaka-fu 533 (JP)

(74) Representative: Crawford, Andrew Birkby et al
A.A. THORNTON & CO.
Northumberland House
303-306 High Holborn
London WC1V 7LE (GB)

(54) **Task managemant apparatus**

(57)    A stable, effective task selection method which sets task execution frequency according to priority and does not cause lockouts or deadlocks. Management/selection lists are used to arrange the priorities of each program which requires parallel execution, with each priority being represented by only one priority label, Each priority label is linked to an identification information list of identification data of one program, or a plurality of programs, having the same priority. The total priority of each priority label in the management/ selection lists is found and a random number within a range from zero to the total priority is generated. Here, the probability that each of the priority labels is selected is based on the priorities. Each time a random number is generated, a task in the program represented by the identification data linked to the priority entry specified by the random number is executed.

FIG. 7

EP 0 790 557 A2

**Description**

BACKGROUND OF THE INVENTION

1. Field of the Invention

The present invention relates to task management apparatus which has a scheduler that has a processor execute tasks in a plurality of programs which are to be executed using parallel processing.

2. Description of the Prior Art

First Prior Art Example

In recent years, rapid advances in semiconductor processing have enabled remarkable improvements in the performance of information processing devices, such as personal computers, workstations, and electronic notebooks. As a result, processors have emerged which are capable of handling heavy processing loads for such tasks as the compression of image signals and the rendering of computer graphics, which conventionally required specialized LSI (Large Scale Integrated Circuits). Together with these increases in processor power, a great variety of application programs have been developed for such information processing apparatuses, such as word processors, spreadsheets, print applications, communication applications, schedule managers, and three-dimensional (3-D) graphics programs, with users being free to launch these application programs at will.

Improvements in processor power have been accompanied by increasing user expectations for multitask processing. Multitask processing (or "multitasking") refers to the simultaneous execution of a plurality of a software programs by an information processing apparatus. As specific examples, this could refer to a print operation being performed by a printing application while text is being inputted into a word processor program, or to the transmission of electronic mail by a communications application while calculation is being performed by a spreadsheet. Alternatively, this could refer to the user enjoying game software while a program which requires a substantial amount of calculation is being executed.

The most classic of all multitasking methods is called the "round-robin" method. In general, tasks are composed of a storage location (a) of an application program, a context (b) made up of information relating to resources, a code part (c) of a program, a data part (d) of a program, and input/output management data (e). In the "round-robin" method, every task is arranged into a queue and is each serviced for a predetermined amount of time in the order of the queue. Once the predetermined time expires, the servicing of a present task is forcibly terminated and right of servicing passes to the next task in the queue, with the task whose execution has been terminated being sent to the back of the queue. By performing control in this way, the execution of each task is performed by allocating an equal amount of servicing time to each task.

The "round-robin" method aims to service each task equally, although in reality, most applications have certain tasks which require priority. As a specific example, an application 2, which is launched after obtaining the execution result of application 1, needs to wait for the completion of the execution of application 1. Similarly, an application 3, which is launched after obtaining the execution result of application 2, needs to wait for the completion of the execution of application 2. In this case, these applications must be executed in the order application 1, application 2, application 3. As another example, since applications which require exclusive control over a hardware resource, such as a specialist device, a particular memory address, or an I/O port, require the resource in question to be made available as quickly as possible, these applications, should be executed with a higher priority than applications with no such restrictions. Certain applications also need to be executed with a certain time period, while other applications are free from such restrictions. When these kinds of applications are subjected to parallel processing, it is necessary to assign an importance to each application. Here, in order to have the tasks reflect the execution importance of applications, it has been conventional practice to set a priority which shows the importance of each task in each application program. In more detail, tasks in urgent applications have been given high priorities, while tasks in less urgent applications have been given progressively lower priorities, so that it has been possible to rearrange the order in which applications are executed. Here, in order to simplify the explanation in this specification, all priorities are expressed using positive integers, with higher values representing higher priorities.

Operating systems which perform multitasking have a special component called a "scheduler" which controls multitasking. Conventional schedulers rearrange the order of tasks based on the "priorities" of each task and perform processing using the "round-robin" method, so that the importance of each application is reflected by the multitask processing.

When simplistic methods for task selection based on priorities are used, the relationship between the probability that a task is performed and the priority of the task becomes inconsistent, and certain tasks may never get selected (a state known as "locked out"). When a number of tasks are locked out, other tasks which need to obtain the results of the locked-out tasks are left stranded in their waiting state. Situations where each task ends up waiting for the completion of another task can even cause system freezes. As a result, task selection based on priorities has generally been regarded as extremely problematic.

Two conventional methods for selecting tasks are the method used by the scheduler in the UNIX (Registered Trade Mark) operating system developed by X/Open Company Ltd. (hereinafter be referred to as the "priority adopted round-robin method") and a method which uses "discrete processing".

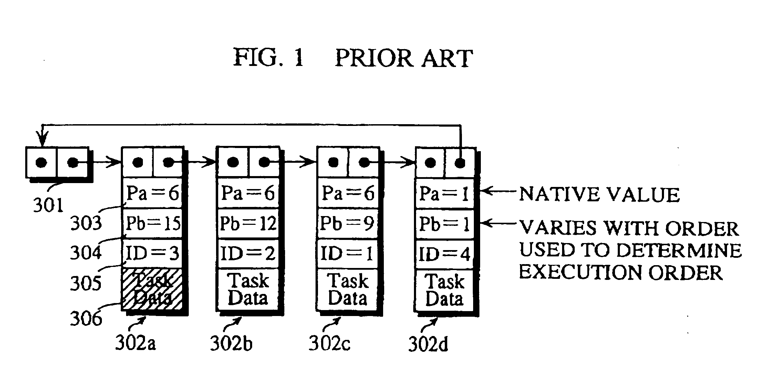

Fig. 1 shows the data construction of the queue used by a conventional scheduler which uses the "priority adopted round-robin method". In this queue, the task selection data 302a-302d are all in wait states and are arranged in alphabetical order.

Order direction link 301, which is a marker for the priority management label, forms a set of links from the task selection data 302a with the identifier ID=3 at the start of the queue to the task selection data 302d with the identifier ID=4.

The task selection data 302a with the identifier ID=3 is made up of a marker for the task selection data shown by the "·I·" symbol, the standard priority $Pa303$, the effective priority $Pb304$, the identification number $ID305$, and the context (shown as TaskData 306 in the figure). Other sets of task selection data have the same data construction.

Here, selection methods for a set of task selection data generally involve the use of a linked list construction or a table construction, although Fig. 1 uses a bi-directional linked list. In Fig. 1, links are only shown in the order direction, although, in reality, bidirectional links are also present.

The following is a description of the selection method for the data construction described above. The scheduler first traces the markers of the task selection data in the order shown by the arrows, and executes the task shown by the identification number ID=3 of the task selection data 302a which is at the front of the list construction for a predetermined time, or otherwise until the task reaches a waiting state due to a given condition.

Next, a predetermined differential value is added to the effective priority $Pb$ of the non-executed tasks, and the effective priority $Pb$ of the previously executed task is lowered to its standard priority $Pa$. By raising and lowering priorities in this way, tasks which have been executed are pushed back in the queue, while tasks yet to be executed are brought forward. This is to say, the task selection data 302 of the previously executed task is taken away from the front of the list and is inserted after a final set of task selection data with an equal effective priority $Pb$. This procedure is repeated until all of the tasks have been completed.

In Fig. 1, the task of the task selection data (which is the task with the identification number ID=3) at the front of the list is executed first. After this execution, the task represented by the task selection data 302a for the identification number ID=3 has its effective priority "15" reduced to its standard priority P, which is "6".

Here, the standard priorities $Pa$ of the task selection data for identification numbers ID=2, 1, 4 are 6, 6, and 1, respectively, with their effective priorities being 12, 9, and 1. As a result, the task selection data 302a for the task represented by the identification number ID=3 whose effective priority has been reduced to "6" is inserted between the task selection data 302c for the task represented by the identification number ID=1 and the task selection data 302d for the task represented by the identification number ID-4.

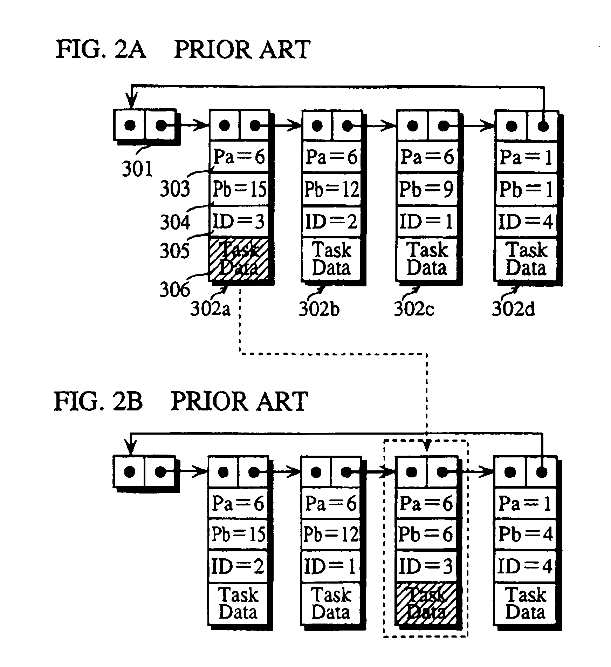

Figs. 2A and 2B show the example case described above where the task selection data 302a for the task represented by the identification number ID=3 is inserted into the position shown by the dotted line when the list construction of the task selection data is rearranged.

The following is an explanation of the method which uses discrete processing (hereinafter called the discrete processing task selection method). Such method is described in detail in USP-5247677, but a simplified explanation will be given below, with reference to Fig. 3.

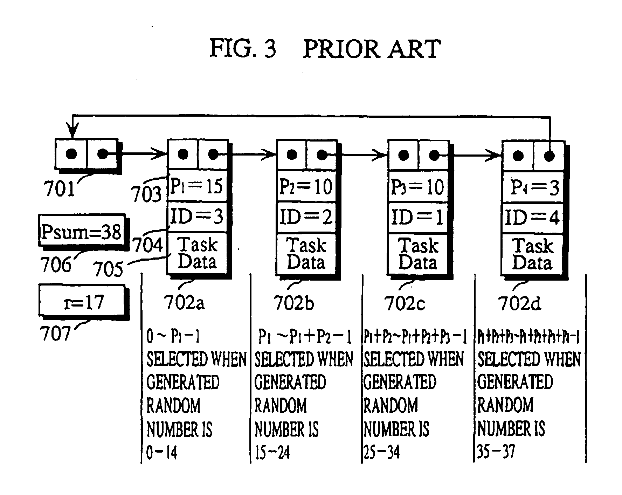

Fig. 3 shows the data construction for task management used by a scheduler under the discrete processing task selection method. Here, the characteristic features of Fig. 3 are the total $Psum$ 706 of the effective priorities $Pb$ in all of the task selection data and the uniform random number $r707$.

The following is an explanation of the task selection method which uses the above data construction. The scheduler first has a uniform random number $r707$ generated within a range between zero to the total $Psum$ of effective priorities $Psum$ 706. Next, the scheduler traces the markers of the task selection data shown by the arrows and judges at what point the total of the priority values of the traced sets of task selection data exceeds the generated random number. In the present example, the cumulative priority is $P=15$ at the task selection data 702a for the task with identification number ID=3, while the cumulative priority is $P=15+10=25$ at the task selection data 702b for the task with identification number ID=2, the cumulative priority $P=25+10=35$ at the task selection data 702c for the task with identification number ID=1, and the cumulative priority is $P=35+3=38$ at the task selection data 702d for the task with identification number ID=4. In this way, the total is lower near the front of the list and higher far from it. For the example in Fig. 3, since the total priority is 15 at the task selection data 702a for the task with identification number ID=3 and 25 at the task selection data 702b for the task with identification number ID=2, a generated uniform random number $r707$ of "17" can be seen to indicate this task selection data 702b for the task with identification number ID-2. As a result, the task selection data 702b is selected and the task having the identification number ID=2 is executed.

The task shown by the ID number in the task selection data 702 is executed for the predetermined time, or otherwise until the task reaches a waiting state due to a given condition. After this execution, another uniform random number r707 is generated and is compared with the cumulative totals to select a task.

Under this discrete processing task selection method, the probability with which a task is selected is directly related to its priority, so that the execution probability of tasks changes in accordance with the priority of each task. This is to say, the execution probability of tasks is distributed in accordance with the priority of each task.

In the above method, it is possible, due to the nature of the uniform random number, for every task which has been assigned a priority to be selected. Accordingly, this means that in principle, "lock outs" will not occur.

The drawback with this discrete processing task selection method occurs when there is a sudden increase in a type of task called a "thread". Here, "threads" are small units of a program which, to improve processing efficiency, can be executed in parallel by a plurality of processor elements. In such a situation, all threads share one of a storage location of an application program (a), a context (b), or a code part (c) of a program. It should be noted here that when an original program is divided into a plurality of threads, each of these threads is assigned the priority which was given to the original program.

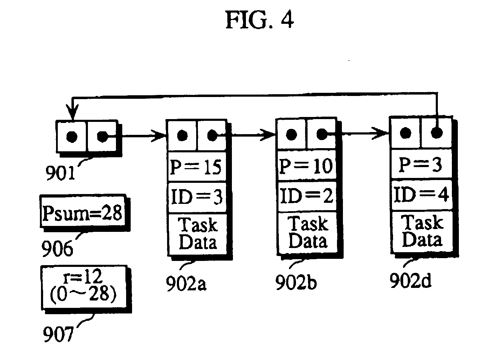

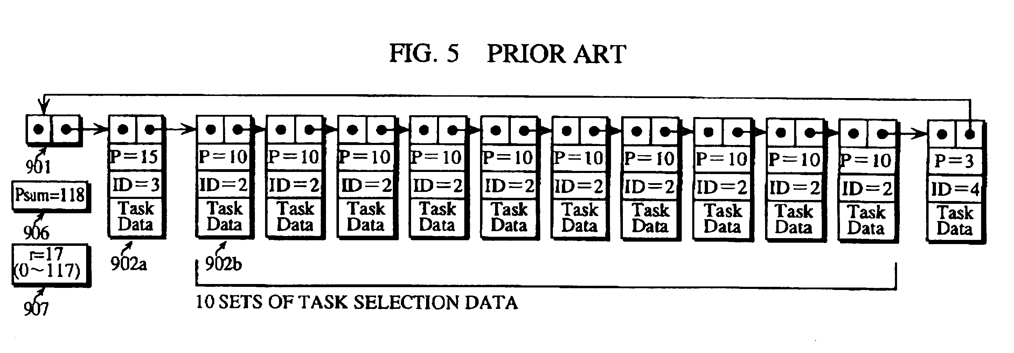

In the example in Fig. 4, the load of the task selection data 902b, out of the task selection data 902a-902c, is divided into ten threads and each of ten threads is given the same priority "10" as the original task. As a result, the list of task selection data shown in Fig. 4 becomes the list shown in Fig. 5.

In Fig. 4, the probability that the task selection data 902a for the task with the identification number ID=3 which has the effective priority Pb=15 is calculated as shown in Equation 1.

## Equation 1

**Probability that task selection data 902a is selected**

**= Effective probability Pb of task selection data 902a /**

**total 906 of effective probability Pb of all tasks**

**= 15/28 (=15+10+3)**

**=0.5357**

Here, once the task with the effective probability Pb=10 is divided into ten threads as shown in Fig. 5, the probability that the task selection data 902a for the task with the identification number ID=3 which has the effective priority Pb=15 becomes as shown in Equation 2.

## Equation 2

**Probability that task selection data 902a is selected**

**= Effective probability Pb of task selection data 902a /**

**total 906 of effective probability Pb of all tasks**

**= 15/118 (=15+(10*10)+3)**

**=0.127**

As can be seen by comparing the results of Equation 2 with Equation 1, the selection probability is reduced to less than a third of its original value.

When a part of a multithread program has its load distributed as above, the execution probability of other programs is drastically reduced, even for application programs which have been assigned a high priority.

As one example, suppose that the execution probability of application 1, whose execution result is obtained by applications 2, 3, 4, 5 and 6, is drastically reduced. Despite being assigned such a high priority, the execution probability of this application will now be very low. As a result, the time taken to have application 1 executed will be increased. This means that applications 2, 3, 4, 5 and 6, which wait for the completion of application 1, will be in a wait state for a longer time. Once several applications have been placed into long wait states in this way, the system may end up in a frozen state.

When the execution probability of tasks which have been assigned a high priority to allow exclusive control over a hardware resource is reduced by the above phenomenon, the hardware resource in question may never be released, so that other tasks which use the same hardware resource are placed into a wait state. As described above, once several applications have been placed into long wait states, the system may end up in a frozen state.

The development of multithread programs has been subject to considerable attention in recent years, and it is expected that many kinds of application programs will be developed in multithread format in the future. As the number of such multithread programs increases, the likelihood of the above problems occurring is also greatly increased.

Second Prior Art Example

In recent years, there has been a great increase in the number of personal computers and multimedia devices with AV (audio visual) functions for the real-time reproduction of video and audio data. These multimedia devices need to execute audio reproduction and video reproduction in parallel (which is to say, simultaneously). Such parallel execution also needs to be performed in real-time. As a result, it is likely that multitask processes (called "real-time processes") which can maintain the real-time aspect of such reproduction will be given increasing attention in the development of multimedia devices in the future.

In general, the maintenance of real-time reproduction is achieved using a scheduler based on the priority adopted round-robin method, where the deadline and execution cycle of each task are reflected in the priority assigned to each task.

The following are three representative examples of scheduler methods with can maintain real-time reproduction.

1. Rate Monotonic Method

The method assigns priorities to tasks using the principle, the shorter the cycle, the higher the priority, so that tasks with heavier processing loads are prioritized.

2. Deadline Method

In this method, each task has a set deadline, and the priority of a task is increased as its deadline approaches.

3. Earliest Deadline First

This method, developed from the deadline method, changes the priority of tasks so that the task which is closest to its deadline is given the highest priority.

Operating systems which include schedulers that pay high regard to the maintenance of real-time reproduction using one of the priority setting policies in the above three methods are already in existence.

However, under this second prior art technique, it has not been possible to accurately maintain reproduction time, so that when these techniques have been used to develop real-time processes, there has been the problem that the reproduced data has not seemed natural to viewers.

As one example, when 16-bit PCM 44.1kHz audio data and MPEG video CD data are executed together by real-time processes, reproduction of 88.1 KByte/sec of audio data is required and reproduction of over 200 KByte/sec of video data is required.

Since a considerable amount of video data needs to be processed, buffer overflow can easily occur. As a result, the reproduction of video data needs to be executed with a high frequency. Audio data, on the other hand, does not carry the danger of buffer overflow and so may be processed with a lower frequency, although the reproduction time needs to be precisely controlled. In the present example, while video data only requires a precision of 40-60 msec, audio data requires 2-16 msec. This difference in precision is caused by the sensitivity of human hearing to delays in audio data compared to human eyesight's relative inability to detect delays in video data.

Video data decoding tasks which need to be executed very frequently also have short execution cycles. As a result, if task execution is performed with higher priorities being assigned based on the shortness of execution cycle, video data decoding tasks will be given priority in buffer usage. However, if tasks with short execution cycles are assigned high priority, audio data decoding tasks with long execution cycles will only be assigned a low priority, so that such decoding will always be put behind video data decoding tasks. When audio data decoding tasks are put behind video decoding tasks in this way, they can no longer be performed with the required 2-16 msec precision.

For the deadline or earliest deadline method, it is possible to conceive an adaptation where the time of reproduction is set as the deadline, so that as the deadline approaches, the priority of audio data decoding tasks is raised to give priority to audio data decoding tasks. However, even if such priority is raised, it is often the case that a number of yet unexecuted tasks are present in the queue. Should there be a plurality of yet unexecuted video data decoding tasks or audio data decoding tasks with a same deadline in the queue, there is no guarantee that the reproduction of the data for the audio data decoding task can be performed in time. If such reproduction is not performed in time, this reproduced audio data will end up sounding like a continual noise to the user.

SUMMARY OF THE INVENTION

The primary object of the present invention is to provide a task management apparatus which can absorb fluctuations in execution probability caused by sudden increases in the number of tasks.

The second object of the present invention is to provide a task management apparatus which, when executing tasks of short execution cycles and tasks of long execution cycles, can maintain the high precision required by the execution of the tasks with long execution cycles.

The primary object of the present invention can be achieved by a task management apparatus including a management list for managing sets of task information that each represent an execution of a task and a scheduler that has tasks alternately executed by a processor,

wherein the management list includes: a priority list which is a sequence of priority labels which each represent a different priority, wherein each priority label is linked to a set of task information which has the same priority as the priority label; and a task information list which is a sequence of a plurality of sets of task information having a same priority, with a set of task information which is linked to a priority label at the front, and wherein the scheduler includes: a selection unit for selecting a priority label, based on priority; and an execution control unit for having a processor execute a task represented by a set of task information, based on the set of task information linked to the selected priority label.

With the construction of Claim 1, the execution probability of application programs made up of one task is unaffected by the division of another application program into ten tasks of equal probability. In the described data construction, even if a large number of threads (tasks) with the same priority are suddenly generated, all of the generated tasks will be represented by one priority management label, so that there is absolutely no change in the execution probability of other tasks. In this way, the execution probability of tasks can be maintained, even when a large number of tasks with the same probability are generated.

The second object of the present invention can be achieved by a task management apparatus comprising a scheduler which has a plurality of tasks executed by a processor, wherein each task represented by a set of task information including a deadline that shows an execution cycle and a priority that shows a required punctuality for the deadline, wherein the scheduler includes: a timer unit for measuring current time; a detection unit for detecting all each set of task information whose deadline is within a given time period from the current time; a selection unit for selecting one out of the detected sets of task information, based on the priorities; and an execution control unit for controlling the processor, based on the selected set of task information.

With the construction of Claim 6, it is possible, when a deadline is imminent for both a task with a short execution cycle and a task with a long execution cycle are imminent, to give priority to the tasks with the long execution cycle. Here, by setting high priorities to tasks which have long execution cycles but which need to be executed punctually on their deadline, the user can have such deadlines respected with a high degree of probability.

BRIEF DESCRIPTION OF THE DRAWINGS

These and other objects, advantages and features of the invention will become apparent from the following description taken in conjunction with the accompanying drawings which illustrate a specific embodiment of the invention. In the drawings:

Fig. 1 shows the data construction used by the conventional technique known as the "priority adopted round-robin method";
Fig. 2A shows the list construction of task selection data under the conventional technique known as the "priority adopted round-robin method before rearranging;
Fig. 2B shows the list construction of task selection data under the conventional technique known as the "priority adopted round-robin method after rearranging;
Fig. 3 shows data construction used by the conventional technique known as the "discrete processing task selection method";

Fig. 4 shows the data construction when few tasks have low priority in the list used by the conventional technique known as the "discrete processing task selection method";

Fig. 5 shows the data construction when many tasks have the same priority in the queue used by the conventional technique known as the "discrete processing task selection method";

Fig. 6 shows model of the computer system which is the subject of the first embodiment of the present invention;

Fig. 7 shows the data construction of the management/selection lists of the scheduler in the first embodiment;

Fig. 8 shows the data construction of a priority management label;

Fig. 9 shows the data construction of a set of task selection data;

Fig. 10 is a flowchart for the task selection process in the first embodiment;

Fig. 11 is a flowchart for the rearranging process for the list of the task selection data in the first embodiment;

Fig. 12 is a flowchart for the generation process of the management/selection lists;

Fig. 13 is a flowchart for the process generating a priority management label from each application k (k=0,1,2,3, ..... K);

Fig. 14 is a flowchart for the process which adds a priority management label and sets of task selection data to the management/selection lists;

Fig. 15 is a flowchart for the process which adds newly generated task selection data to the end of the selection list of an existing priority management label;

Fig. 16 is a flowchart for the process which adds a newly generated priority management label to the end of the management list;

Figs. 17A-17C are drawings showing a rearranging of the order of the task selection data for a priority management label, according to the processing in the flowcharts;

Fig. 18 shows the generation of management/selection lists according to the processing in the flowcharts;

Fig. 19 also shows the generation of management/selection lists according to the processing in the flowcharts;

Fig. 20 shows the data construction of the management/selection lists to illustrate the execution probability of high-priority tasks;

Figs. 21A and 21B show a transformation, due to the addition of task selection data, in the data construction of the management/selection lists of scheduler 12 in the first embodiment of the present invention;

Figs. 22A-22C show a transformation, due to the addition of task selection data and a priority management label, in the data construction of the management/selection lists of scheduler 12 in the first embodiment of the present invention;

Fig. 23 shows the data construction of the management/selection lists of the scheduler 12 in the second embodiment of the present invention;

Fig. 24 shows the data construction of a priority management label in the second embodiment;

Fig. 25 shows data construction of a set of task selection data in the second embodiment;

Fig. 26 is a flowchart for the task selection process in the second embodiment of the present invention;

Fig. 27 is a flowchart for the priority setting process in the second embodiment of the present invention; and

Figs. 28A-28D show a transformation in the data construction of the management/selection lists of scheduler 12 in the first embodiment of the present invention.

## DESCRIPTION OF THE PREFERRED EMBODIMENTS

### First Embodiment

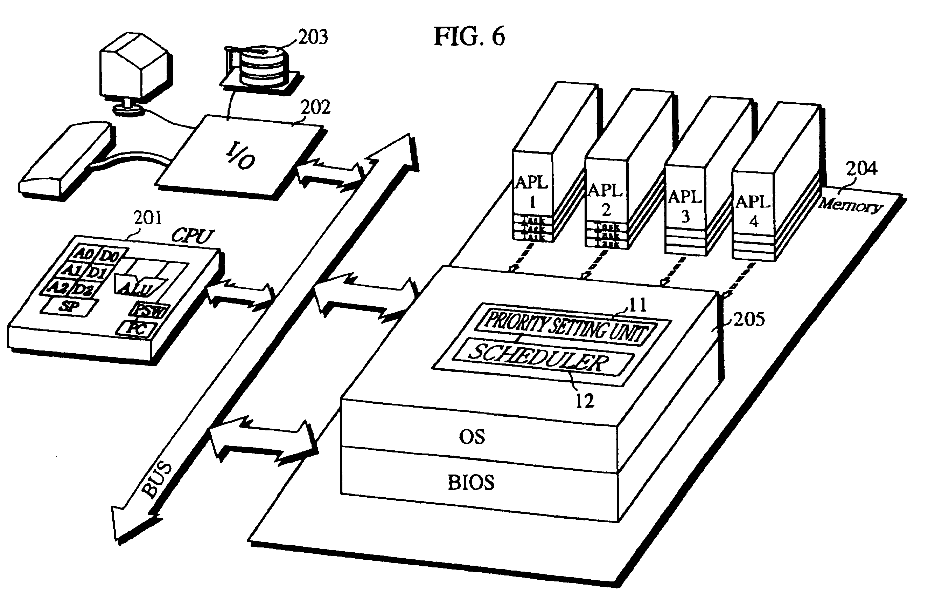

The following is an explanation, with reference to the drawings, of an operating system as a first embodiment of the task selection apparatus of the present invention. The computer system to which this explanation relates is composed as shown in Fig. 6. As can be seen from the figure, the present computer system is made up of a CPU 201, an I/O (input/output) port 202, a disk device 203, a memory 204, an operating system 205, and other components such as a bus and a BIOS (Basic Input/Output System).

The CPU 201 includes a decoder for decoding the instructions which make up the software stored in the memory 204, an ALU (Arithmetic Logic Unit) calculator for performing data calculations and address calculation for the results of the decoding, a program counter for indicating addresses of instructions to be performed, data registers, address registers, a program status word (PSW) register which includes various flags showing the operational state of the CPU, and a stack pointer (SP) storing a first address of a memory region used as a stack. This CPU alternately executes tasks in each application. It should be noted here that this construction is given merely as an example, so that like many modern CPUs, such as RISC (Reduced Instruction Set Computer) processors or superscalar CPUs, the program status word register PSW may be omitted.

The I/O port 202 is connected to a display, the disk device 203, a keyboard, a mouse, and other such components.

The disk device 203 stores the operating system 205 and a variety of applications as files.

The BIOS and the operating system 205 are loaded into the memory 205, with the memory 204 also being used to open applications 1 through 4, as shown in Fig. 6. Here, application 1 is video reproduction software, application 2 is a spreadsheet, application 3 is audio reproduction software, and application 4 is communication software, so that four different kinds of software are opened in the memory 204. The execution units of these applications are divided into a plurality of tasks which are executed by the CPU 201 via the operating system 205. Here, of these applications 1-4, application 1 is in multi-thread format, so that it indicates to the operating system 205 that it needs to be divided into six threads (tasks).

The operating system 205 performs the display of icons which represent the applications stored as files in the disk device 203, assigns windows to the applications to be launched, and uses the display, keyboard, and mouse to provide the user with an environment for interactive operations. As a result, the user is able to provide the CPU 201 with applications by merely using a cursor to indicate an icon on the display and thus have such applications executed.

The operating system 205 determines the importance of the applications opened in the memory 204 and is made up of a priority setting unit 11 for setting the priority of each application and a scheduler 12 for dividing each application into tasks based on its priority and having the tasks executed by the CPU 201. Here, the setting of priority does not compose part of the gist of the present invention, so that such operations will not be explained here.

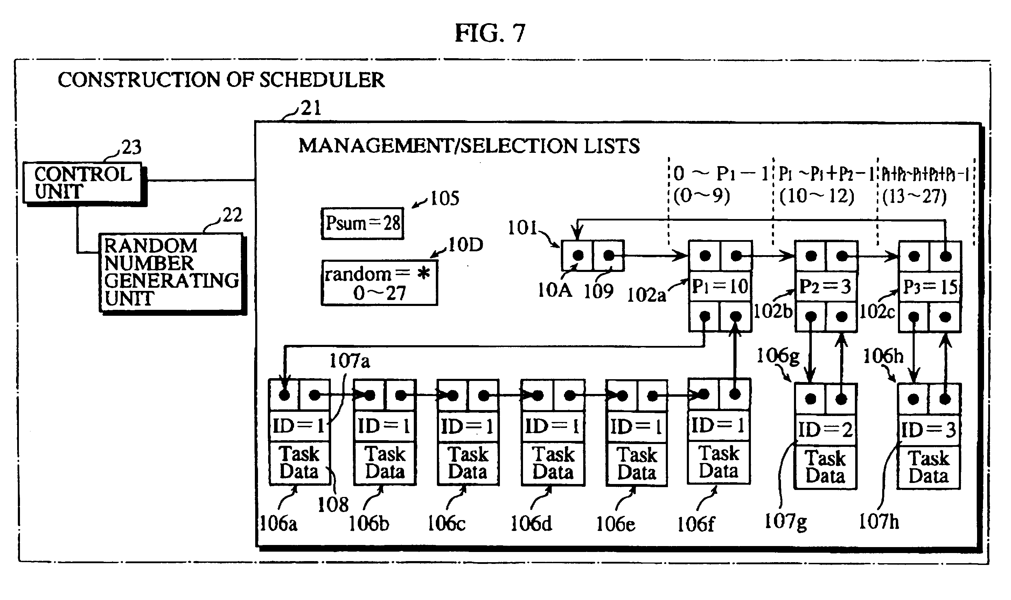

The construction of the scheduler 12 is shown in Fig. 7. As shown in the figure, the scheduler 12 is made up of management/selection lists 21 for managing the priority of each application to be executed in parallel, a random number generating unit 22 for generating random numbers for indicating tasks managed in the management/selection lists 21, and a control unit 23 for generating and updating the management/selection lists 21, and for having the tasks in the applications managed by the management/selection lists 21 successively executed by the CPU 201.

The following is an explanation of the data construction of the management/selection lists 21, with reference to Fig. 7. As shown in Fig. 7, the management/selection lists 21 are made up of an order direction link 109 for the priority management labels, a reverse direction link 10A, a priority management label 102a, a priority management label 102b, a priority management label 102c, and sets of task selection data 106a-106h. In the present drawing, the arrows and the black marks "·" show the links which are formed between sets of task selection data 106, between priority management labels 102, and between sets of task selection data 106 and priority management labels 102. In the following explanation, both these arrows and black marks will be referred to as "links".

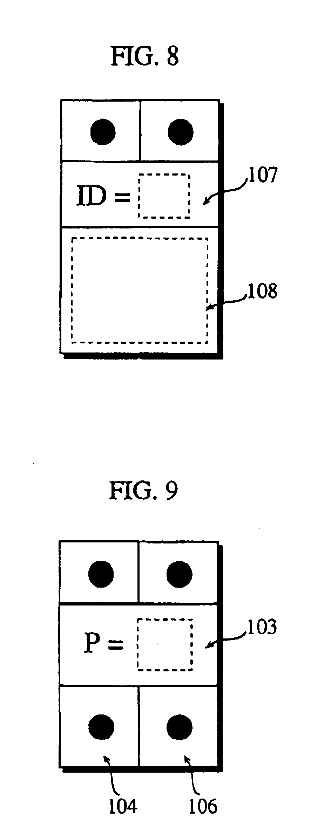

Each set of task selection data 106a-106h is information relating to a task. As shown in Fig. 8, each of these sets of task selection data 106 is made up of an identifier 107 for an application program and a context 108 which includes information relating to resources, although it should be noted that each set of task selection data is different, as described below.

Task selection data 106g corresponds to a task generated from application program 2. Accordingly, the task identifier 107g is set at "2" to show that this task has been generated from application program 2.

In the same way, task selection data 106h corresponds to a task generated from application program 3. Accordingly, the task identifier 107h is set at "3" to show that this task has been generated from application program 3.

Task selection data 106a to task selection data 106f correspond to the six threads (tasks) generated from application program 1. Accordingly, the task identifiers 107a - 107f are all set at "1" to show that these tasks have been generated from application program 1. Here, six sets of task selection data are generated for application program 1 because application program 1 instructs the operating system 205 to divide the processing load into six tasks.

The execution order of the tasks corresponding to task selection data 106a - 106f is as shown by the arrows in Fig. 7. Task selection data 106a with the identification number ID=1 has a rightward arrow extending from the upper right black mark, with the task selection data 106b which also has the identification number ID=1 lying at the head of this arrow. In the same way, task selection data 106a has a rightward arrow extending from the upper right black mark, with the task selection data 106c lying at the head of this arrow. By tracing these arrows, the order task selection data 106a, task selection data 106b, task selection data 106c, task selection data 106d, task selection data 106e, task selection data 106f can be ascertained for the sets of task selection data having the identification number ID=1. Hereinafter, this kind of queue made up of one or more sets of task selection data will be called a "selection list".

As shown by the data format in Fig. 9, the priority management labels 102a-102c are each made up a priority column 103 for entering a priority decided by the priority setting unit 11 for each application program, an order direction link 104 for linking the priority management label to a set of task selection data 106, and a reverse order link 10C. From the priority columns 103 of priority management label 102a, priority management label 102b, and priority management label 102c in Fig. 7, it can be seen that the priority management labels 102a, 120b, and 102c have priorities of "10", "3", and "15", respectively.

It can be seen from Fig. 7 that the order direction link 104 of the priority management label 102b which has the priority "3" connects priority management label 102b to task selection data 106g and the reverse order link also connects priority management label 102b to task selection data 106g.

In the same way, the order direction link 104 of the priority management label 102c which has the priority "15" connects priority management label 102c to task selection data 106h and the reverse order link also connects priority management label 102c to task selection data 106h.

On the other hand, while the order direction link 104 of the priority management label 102a which has the priority "10" connects priority management label 102a to task selection data 106a, the reverse order link connects task selection data 106f to priority management label 102f. This is because task selection data 106a to task selection data 106f form a queue whose execution order is given as task selection data 102a to task selection data 102f, as shown by the order direction link and the reverse direction link of priority management label 102a.

Putting this another way, task selection data 106a - task selection data 106f are tasks which have been generated from a same application program and have all been set a priority of "10", which can be seen from the priority column of the priority management label 102a. This is to say, by having the priority which is common to six tasks represented by one priority management label 102a, the redundancy of setting each of the tasks its own priority can be avoided, and list which only uses has one entry of each priority can be generated. Hereinafter, this plurality of priority management labels 102a - 102c is referred to as the "management list".

The total priority column 105 is a column in which the control unit 23 records the total of the priorities in the priority management labels 102a - 102c.

The random number column 10D is a column in which the control unit 23 records a random number which it has generated as a integer in a range between zero and the (total priority minus one).

The control unit 23 selects one priority label 102 in accordance with its execution probability whose magnitude varies with priority, and stores the execution probability of each task in accordance with the priority. Here, the statement "the magnitude of execution probability varies with priority" refers to the following calculation:

$$\text{probability} = \text{priority of priority management label/total priority for all labels.}$$

The total priority for the priority management labels shown in Fig. 7 is "10+3+15" which equals "28". As a result, the execution probability of priority management label 102a, for example, is "10/28=0.357".

In the same way, the execution probability of priority management label 102b is "3/28=0.107" and the execution probability of priority management label 102c is "15/28=0.536".

By having the priority management labels 102 executed with these execution probabilities, the control unit 23 distributes an integer range from 0 to "total priority for the priority management labels minus one" between the priority management labels in accordance with the magnitude of their respective priorities. In other words, the control unit 23 distributes the integer range 0-9 (=10-1) to the priority management label 102a which has the priority "10", the integer range 10-12 (=13(10+3)-1) to the priority management label 102b which has the priority "3", and the integer range 13-27 (=28(15+10+3)-1) to the priority management label 102c which has the priority "15".

It should be noted here that the six sets of task selection data which have the same priority are represented by only one priority management label. As a result, the execution probability of 10/28 is only assigned to the task positioned at the front of the queue (the task selection data 106a which is linked to order direction link 104), out of the task selection data 106a-106f.

If, for the above example, the "discrete processing task selection method" described in the prior art section were used, a list made up of the six tasks generated from the application program 1, application program 2, and application program 3 would be generated, so that the total probability for the priority management labels 102 would be "78" (=10∗6+3+15). When this is the case, the execution probability distributed to application program 2 would be 3/78=0.038, and the execution probability distributed to application program 3 would be 15/78=0.192. As can be seen by comparing these results with the values for the present embodiment, the execution probability for application program 2 and application program 3 drop to less than half their values in this embodiment when, as in "discrete processing task selection method", a list made up of the six tasks generated from the application program 1, application program 2, and application program 3 is used.

On the other hand, it can be seen from Fig. 7 that the number of tasks which are generated from application program 1 will not affect the execution probability of application program 2 and application program 3, so that it makes no difference whether application program 1 is made up of one task or ten tasks. As a result, even if there is a sudden increase in the number of tasks due to the generation of a number of tasks for one application, all such tasks will still be represented by the same priority management label, so that this increase in tasks will not affect the execution probability of the other tasks. As a result, application programs 2 and 3 are not affected by the load distribution performed for application program 1 and the execution probability of tasks can be maintained, even when there is a sudden increase in the number of tasks having the same priority.

Having distributed the stated integer range between the priority management labels as described above, the control unit 23 has the random number generating unit 22 generate a uniform random number between zero and "total priority for the priority management labels 102 minus one" and detects which priority management label 102 has the integer range in which the generated random number falls.

The generation of a uniform random number referred to here can be performed in a number of ways, including a multiplicative congruence method and a mixed congruence method. Such methods bear no relation to the gist of the present embodiment and so will not be described in detail. As an incidental matter, the present embodiment uses a mixed congruence method.

Equation 3

$$x(i+1) = (65537 \cdot x(i) + 3) \bmod 4297589136$$

$$r(i) = \text{total of priority } P \cdot x(i)/4297589136$$

where $r(i)$ is used as a uniform random number from zero to the total priority.

The following is an explanation of the selection method which uses the data construction described above.

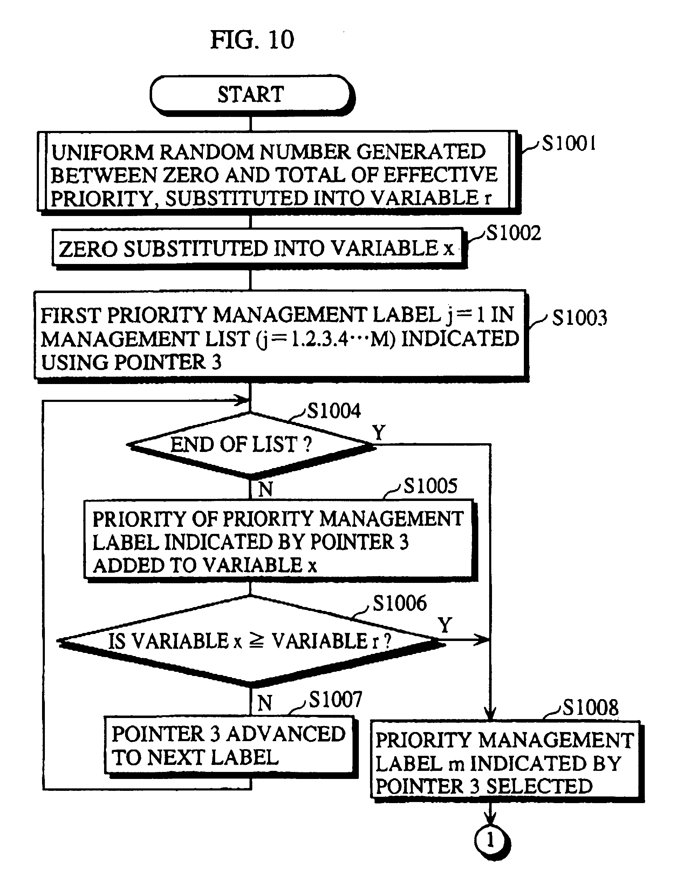

Fig. 10 is a flowchart which will be used to explain the selection method of a priority management label 102 in the present embodiment. In this flowchart, the variable r is a uniform random number which is generated in S1001 in a range between zero and the total priority, and the pointer 3 is a pointer which is provided to indicate a present priority management label when tracing the management list from the start to the end. The variable x is a variable provided for finding a total of priority values from the priority management label at the front to the priority management label indicated by the pointer 3.

[Case when variable r=27]

In step S1001, a uniform random number is generated for the range between zero and the total priority value and is substituted into variable r. The following explanation deals with the case when, in step S1001, the generated variable r is "27". Following step S1001, zero is substituted into variable x in step S1002, and in step S1003, the priority management label 102 indicated by the order direction link is substituted into pointer 3, so that the first priority management label in the management list j (j=1, 2, 3....M) is set in the pointer 3. For the example shown in Fig. 7, the priority management labels 102 included in the management list are priority management label 102a, priority management label 102b, and priority management label 102c, so that since the first priority management label 102a corresponds to j=1, the pointer 3 is set as indicating priority management label 102a.

Next, it is judged in step S1004 whether the pointer 3 is indicating the last priority management label in the management list. For the above case where pointer 3 indicates priority management label 102a, this judgement is "No", so that the processing proceeds to step S1005, where the priority of the priority management label indicated by the pointer 3 is added to the variable x. Following this, in step S1006, it is judged whether variable x is equal to or greater than variable r.

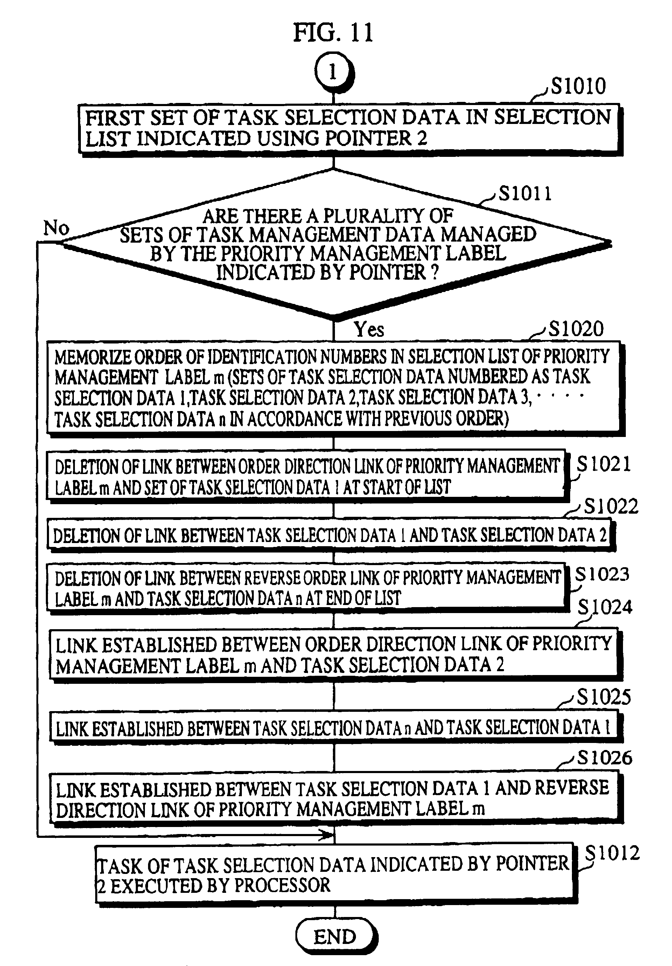

For the present example, the priority "10" of the priority management label 102a indicated by the pointer 3 is added to variable x and it is judged whether variable x is equal to or greater than variable r. Since the value of variable x, "10", is less than variable r, "27", the processing advances to step S1007 where the pointer 3 is moved to the next priority management label, in this case, priority management label 102b. The processing then returns to step S1004 where it is judged whether the pointer 3 is indicating the end of the management list. Here, for the present example, the end of the management list is the reverse order link 10A of the priority management labels. For the above case where pointer 3 indicates priority management label 102b, pointer 3 is yet to reach this point, so that the judgement is "No", and the processing proceeds to step S1005, where the priority of the priority management label indicated by the pointer 3 is added to the variable x. Here, the priority of the priority management label 102b indicated by the pointer 3 is "3", so that variable x becomes "13". In step S1006, since the value of variable x, "13", is less than variable r, "27", the processing advances to step S1007 where the pointer 3 is moved to the next priority management label, in this case priority management label 102c. The processing then returns to step S1004 where it is judged whether the pointer 3 is indicating the end of the management list. For the above case where pointer 3 indicates priority management label 102c, pointer 3 is yet to reach the reverse direction link, so that the judgement is "No", and the processing proceeds to step S1005, where the priority of the priority management label indicated by the pointer 3 is added to the variable x. Here, the priority of the priority management label 102c indicated by the pointer 3 is "15", so that variable x becomes "28". In step S1006, it is judged whether variable x is equal to or greater than variable r and, since this is the case when variable x=28 and variable r=27, the processing advances to S1008, where the priority management label 102c is selected and the processing advances to step S1010 in Fig. 11.

In step S1010 in Fig. 11, the pointer 2 is set at the first set of task selection data 106h in selection list relating to the priority management label 102c. In S1011, it is judged whether there is a plurality of sets of task management data related to the priority management label 102c. In the present example, since there is only one set of task selection data, task selection data 106h, related to priority management label 102c, the result of this judgement in step S1011 is "No". The processing advances to step S1012 where the task represented by the task selection data indicated by pointer 2 is performed by the processor.

[Case when variable r=8]

The following explanation deals with the case when variable r is set at "8" in step S1001. Following step 51001, zero is substituted into variable x in step S1002, and in step S1003, the first priority management label in the management list j (j=1, 2, 3....M) is set in the pointer 3. For the example shown in Fig. 7, the first priority management label 102a corresponds to j=1, so that the pointer 3 is set as indicating priority management label 102a.

Next, it is judged in step S1004 whether the pointer 3 is indicating the end of the management list. For the above case where pointer 3 indicates priority management label 102a, this judgement is "No", so that the processing proceeds to step S1005, where the priority of the priority management label indicated by the pointer 3 is added to the variable x. Following this, in step S1006, it is judged whether variable x is equal to or greater than variable r.

In the present example, the priority "10" of the priority management label indicated 102a by the pointer 3 is added to variable x, so that when the judgement in step S1006 is made, variable x is found to be greater than the value "8" of variable r ("Yes"). Consequently, the processing advances to step S1008.

In step S1008, the priority management label 102a is selected and the processing advances to step S1010 in Fig. 11. In step S1010 in Fig. 11, the pointer 2 is set at the first set of task selection data in selection list relating to the priority management label 102a. In S1011, it is judged whether there is a plurality of sets of task management data related to the priority management label 102a. In the present example, since task selection data 106a to task selection data 106f are related to priority management label 102a, the result of this judgement in step S1011 is "Yes". As a result, the processing advances to step S1020.

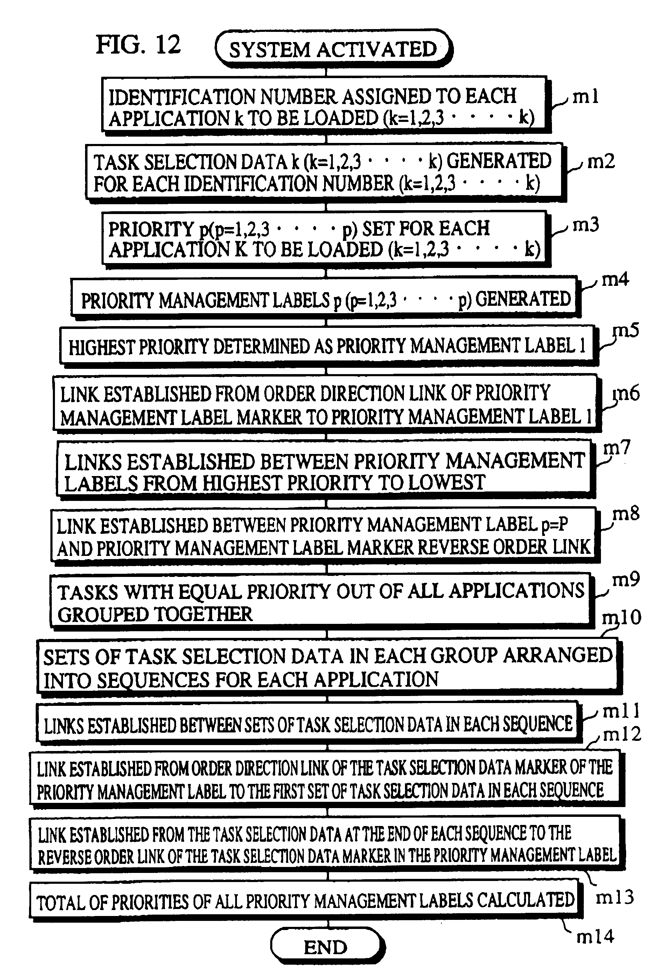

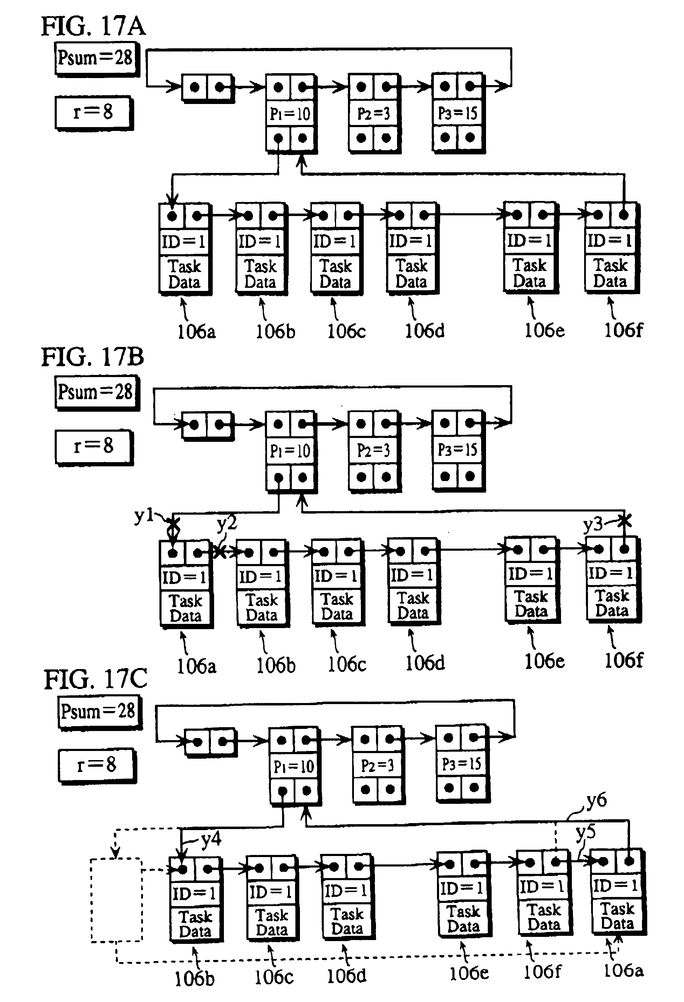

The following is an explanation of the processing in steps S1020 to S1026, with reference to Figs. 17A to 17C. Here, Figs. 17A to 17C show the procedure of the selection process for a set of task selection data according to the flowchart in Fig. 12.

In step S1020, the order of the identification numbers in the selection list for priority management label m is stored. For the state shown in Fig. 17A, the sets of task selection data 106a to 106f are respectively given the identification numbers task selection data 1, task selection data 2, task selection data 3 ..... task selection data n with respect to the order in which they were previously stored. In step S1021, the link between the order direction link of the priority management label m and the task selection data 1 at the start of the selection list is deleted. As a result, the link shown by the arrow yl in Fig. 17B is removed.

In step S1022, the link between task selection data 1 and task selection data 2 is deleted. As a result, the link shown by the arrow y2 in Fig. 17B is removed.

In step S1023, the link between task selection data n positioned at the end of the selection list and reverse order link of the priority management label m is deleted. As a result, the link shown by the arrow y3 in Fig. 17B is removed.

In step S1024, a link is established from the order direction link of the priority management label m to the task selection data 2. As a result, the link shown by the arrow y4 in Fig. 17C is created.

In step S1025, a link is established from the task selection data n (here, "6") to the task selection data 1. As a result, the link shown by the arrow y5 in Fig. 17C is created.

In step 51026, a link is established from the task selection data 1 to the reverse order link of the priority management label m. As a result, the link shown by the arrow y6 in Fig. 17C is created. By means of the above deletion and creation of links, the order direction link of the priority management label 102a is linked to the task selection data 106b as shown by the arrow y4, the reverse direction link of the priority management label 102a is linked to the task selection data 106a as shown by the arrow y6, and the execution order of the task selection data 106 becomes task selection data 106b, task selection data 106c, task selection data 106d, task selection data 106e, task selection data 106f, task selection data 106a.

After step S1026, the processing advances to step S1012, where the task represented by the task selection data indicated by pointer 2 is executed by the processor.

This rearrangement of the order task selection data 106, in what may be called a "priority-removed round robin method" means that every set of task selection data 106 has a definite chance of being selected.

As stated above, the probability that priority management label 102a will be selected is "10/28", and since there are six sets of task selection data 106 related to priority management label 102a, the probability that each of tasks in these sets of task selection data will executed is "10/(28*6)=0.060". While this is a low probability, the fundamental nature of the tasks in these sets of task selection data 106a - 106f is that they are threads which are created to divide the processing load of application program 1, so that if any of the tasks in these sets of task selection data is executed, the processing of application program 1 will proceed.

[Generation of the Management/Selection Lists]

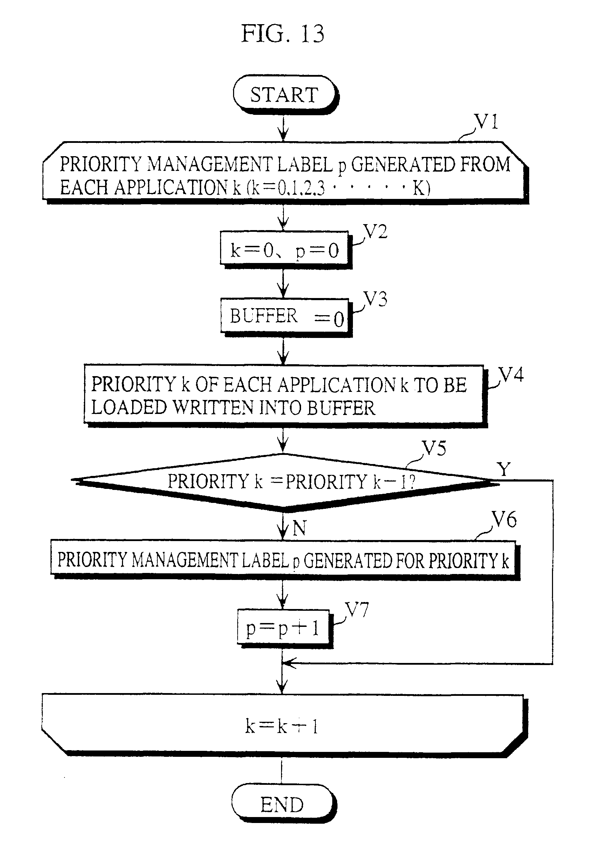

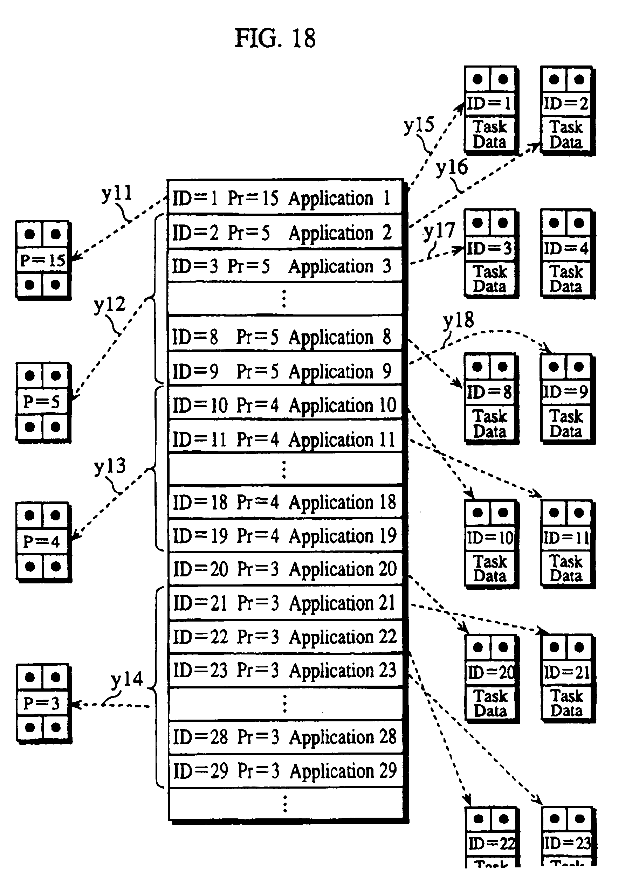

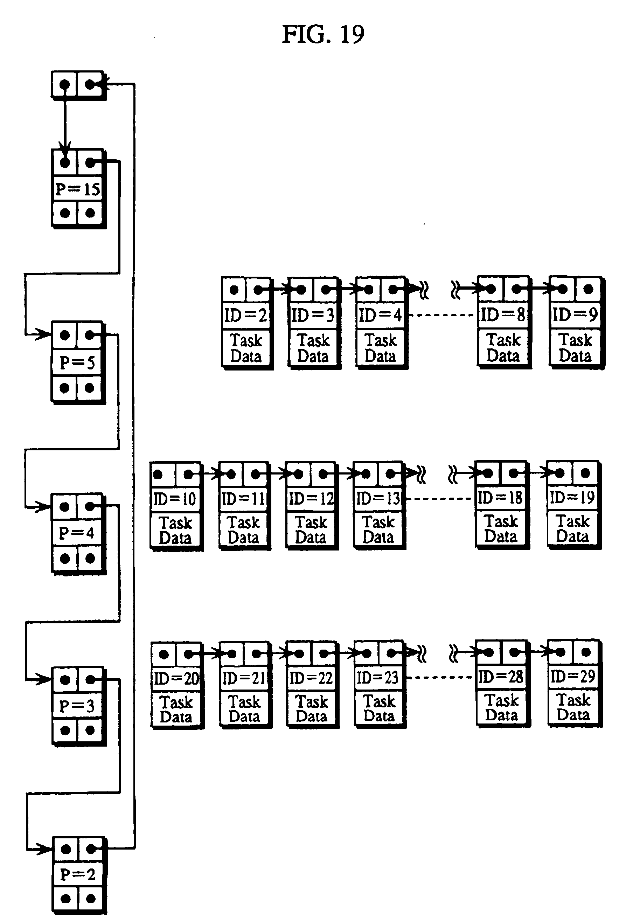

The following is an explanation of the procedure which generates the management/selection lists shown in Fig. 7, with reference to the flowcharts shown in Figs. 12 and 13. An example of this procedure is shown in Figs. 18 and 19.

When the system is activated, each application k (k=0,1,2...K) to be loaded into memory is assigned an identification number in step ml. In step m2, task selection data k (k=0,1,2...K) is generated for each assigned identification number k (k=0,1,2...K). As a result, task generation data is generated as shown by the arrows y15, y16, y17, and y18 in Fig. 18.

In step m3, a priority p (p-0,1,2,3...P) is set for each application k (k-0,1,2...K) by the priority setting unit 11. In step m4, priority management labels are generated according to the flowchart in Fig. 13. This is described later in this specification. As a result of step m4, the priority management labels shown by the arrows y11, y12, y13, and y14 in Fig. 18 are generated.

In step m5, the priority management label with the highest priority is found.

In step m6, a link is established from the priority management label marker to the priority management label with the highest priority. In step m7, links are established between the priority management labels, from the highest priority to the lowest. Following this, in step m8, a link is established between the priority management label p=P and the priority management label index reverse order link. Once these steps have been executed, the linked priority management labels are combined as shown in the left-hand side of Fig. 19. It should be noted here that due to the nature of the random numbers, tasks with a same priority need to be organized into groups, although it is not necessary for priority management labels to be arranged into descending order of priority. This is to say, it is not always necessary to arrange the priority management labels into a predetermined order.

In step m9, tasks with a same priority are arranged with regard to the application to which they belong. In step m10, the sets of task selection data grouped together for each application is arranged into sequences. In step mll, links are established between sets of task selection data for each sequence. As a result, links are established between sets of task selection data for tasks which have been set the same priority, as shown in the right-hand side of Fig. 19.

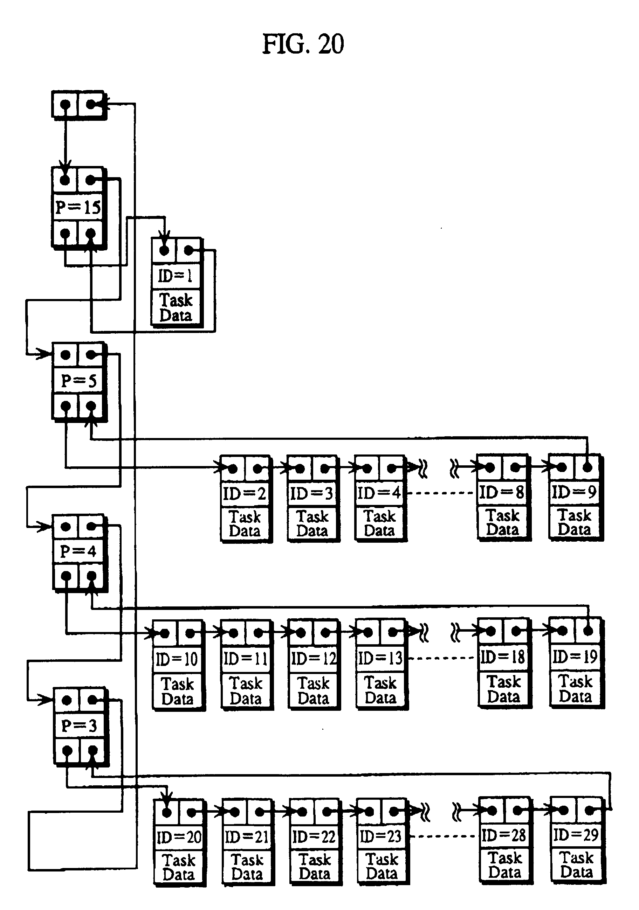

In step m12, links are established between the order direction link of task selection data marker of each priority management label and the first set of task selection data in each sequence. In step m13, links are established from the final sets of task selection data to the reverse order link of the task selection data marker of the priority management labels. As a result, the final sets of task selection data are linked to the priority management labels as shown in Fig. 20. Next, in step m14, the total priority of all the priority management labels is calculated.

By performing the set of processes in steps ml-m14 in this way, the management/selection lists shown in Fig. 20 are generated for all of the applications to be loaded.

The following is an explanation of the generation of priority management labels p from the applications k (k=0,1,2,3 ... K), with reference to the flowchart in Fig. 13. Here, the processing is moved to this flowchart in Fig. 13 by the processing in step m4 of Fig. 12.

In step V2, the variable k indicating an identification number given to an application is set at k=O and the variable p indicating a set of task selection data is set at p=0. In step V3, the buffer for storing priority is set at buffer=0. In step V4, the priority k set for the application k is written into the buffer. In step V5, priority k is compared to the priority immediately preceding priority k, which is to say a judgement of whether priority (k)=priority (k-1) is performed. When the priorities differ, the processing advances to step V6, where a priority management label is generated for priority k. After this, the value of variable p is set at p=p+1 in step V7.

If the priorities are equal in step V5, steps V5 and V7 are skipped and the processing returns to step V1, where the value k is incremented by one to indicate the next application.

The processing in steps V1-V7 is repeated for all of the identification numbers which have been set for applications to generate a management list in which each priority is represented by only one priority management label.

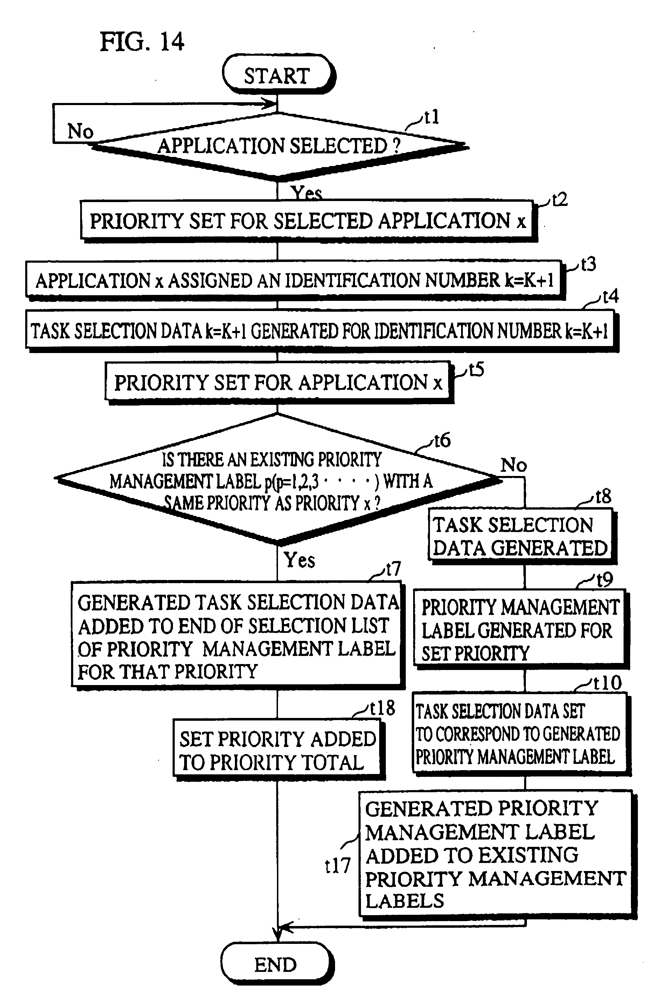

The following is an explanation of an addition of a priority management label 102 and task selection data 106 to the management/selection lists described above, with reference to the flowcharts given in Figs. 14-16.

First, the following explanation of the addition of a priority management label 102 and task selection data 106 to the management/selection lists will refer to the flowchart in Fig. 14. In step t1 of Fig. 14, the operating system 205 waits for the selection of a menu displayed on the display screen. When a selection is made, the processing advances to step t2.

In step t2, the priority is set for the selected application x. In step t3, the identification number k=K+1 is assigned to the application x, and in step t4, the task selection data k=K+1 for this identification number k=K+1 is generated. Following this, in step t5, the priority x is set for this application. In step t6, it is judged whether a priority management label p (p=1,2,3,...P) for the same priority as priority x already exists. If so, the processing advances to step t7, or if not, the processing advances to step t8.

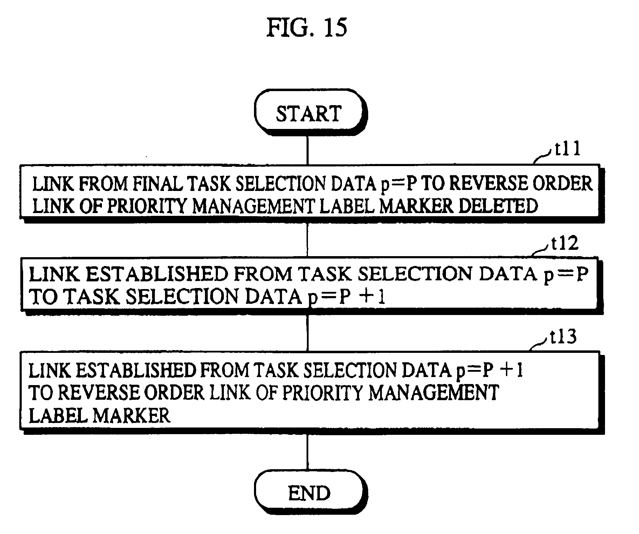

When a priority management label already exists for priority x, sets of task selection data are generated and added to the end of the selection list for this priority management label by the processing of the flowchart in Fig. 15, before the set priority is added to the total in S18.

When it is judged in step t6 that no priority management label exists for priority x, sets of task selection data are generated in steps t8, before a priority management label is generated in step t9 for the set priority x. Following this, in step t10, the generated sets of task selection data are made to correspond to the newly generated priority management label. The processing then advances to step t17, where the generated priority management label is added to the existing priority management labels in the management list.

By performing the set of processing in steps t1 to t17, the priority management label and task selection data are added to the management/selection lists.

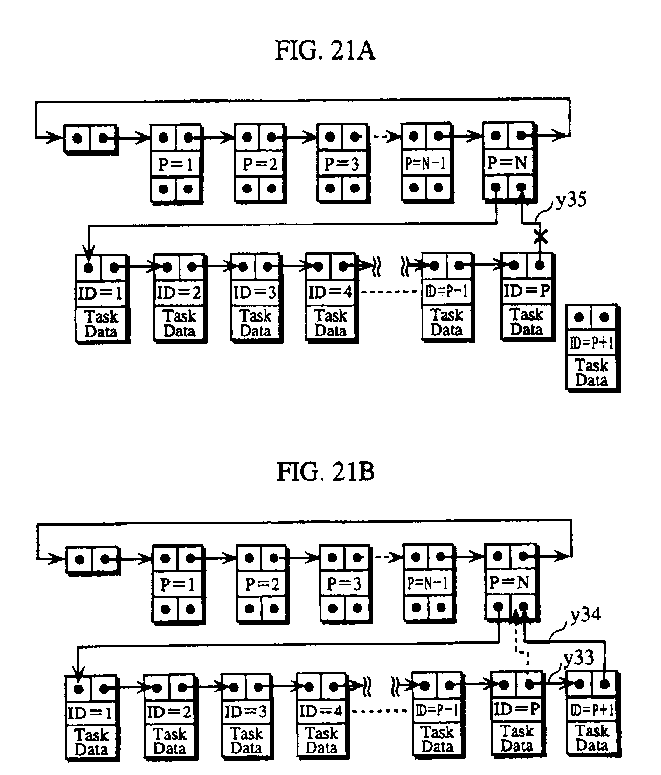

The following is an explanation of the addition of the generated sets of task selection data to the end of the selection list of a priority management label, with reference to the flowchart in Fig. 15 and the drawings in Figs. 21A-21C.

This explanation assumes the processing has advanced to step t11. In step t11, the link between the final set of task selection data p=P to the reverse direction link of task selection data marker is deleted. As a result, the link shown by the arrow y35 in Fig. 21A is deleted. Next, in step t12, a link is established from the set of task selection data p=P to the task selection data p=P+1. Following this, in step t13, a link is established from the set of task selection data p=P+1 to the reverse direction link of task selection data marker. As a result, the task selection data p=P+1 is added to the selection list, as shown by arrows y33, y34 in Fig. 21B.

As a result of this processing in steps t11 to t13, new task selection data is added to the task selection data belonging to an existing priority management label.

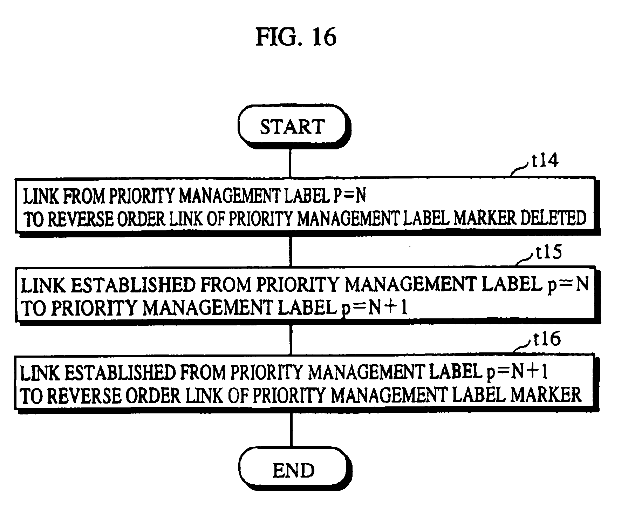

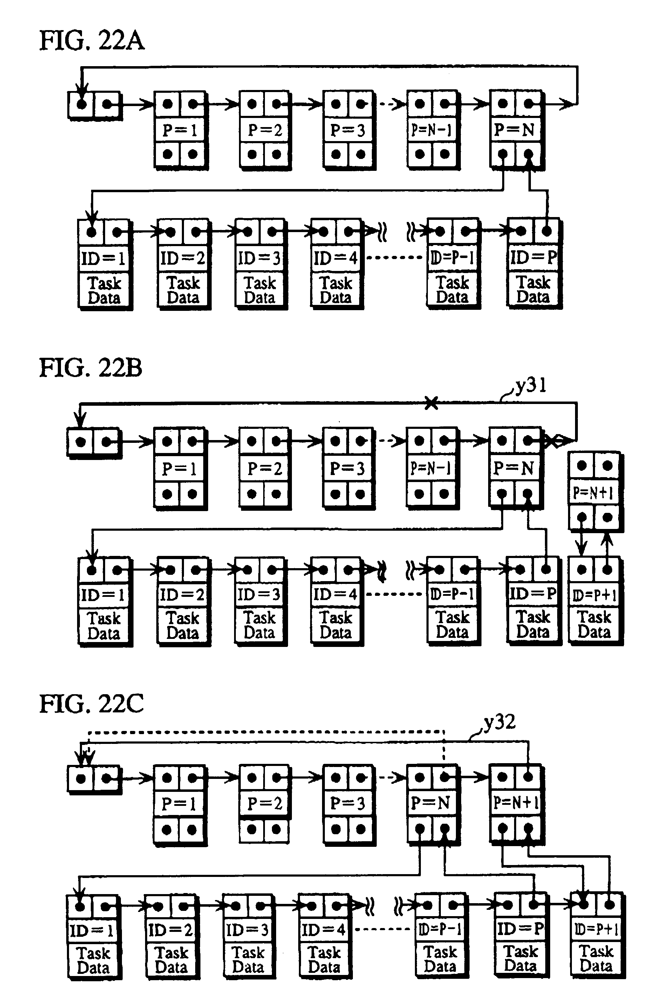

The following is an explanation of the addition of a priority management label, with reference to the flowchart in Fig. 16 and the drawings in Fig. 22A-22C.

This explanation assumes the processing has advanced to step t14. At this point, the selection list is in the state shown in Fig. 22A. In step t14, the link between the final set of priority management label p=N to the reverse direction link of priority management label marker is deleted. As a result, the link shown by the arrow y31 in Fig. 22A is deleted. Next, in step t15, a link is established from the priority management label p=N to the priority management label p=N+1. Following this, in step t16, a link is established from the priority management label p=N+1 to the reverse direction link of the priority management label marker. As a result, the link shown by arrow y32 in Fig. 22C is established.

As a result of the processing in steps t14 to t16, a new priority management label is added to the end of the existing priority management labels.

As described above, in the present embodiment, a list which is constructed so that every task with a same priority is represented by the same priority management label 102 is used, so that if, for example, application program 1 is divided into ten threads, the execution probability of other application programs 2 and 3, which do not require division into threads, will be unaffected by such division of application program 1. Accordingly, even if there is a sudden increase in tasks having an equal priority due to the division of an application into threads, all of such tasks will be represented by one priority management label in the data construction shown in Fig. 7, so that there will be no change in the execution probability of other tasks. Thus the execution probabilities of all tasks can be maintained even when there is the conventionally problematic sudden rise in the number of tasks due to the generation of a number of equal priority tasks.

Second Embodiment

The second embodiment of the present embodiment has been conceived for a scheduler in a operating system with performs real time processes, and is characterized by changing the priorities of each priority management label with regard to time.

In the present embodiment, the scheduler performs real time processing using time slices of 10 msec (in other words, 1/100 of one second). Here, each task is also provided with a deadline which is a resolution time expressed in units of minutes and seconds, which is to say, a smallest unit (second) which is one hundred times longer than the time slice. In the following explanation, such deadlines are expressed as "00:00" which represents a number of minutes and seconds.

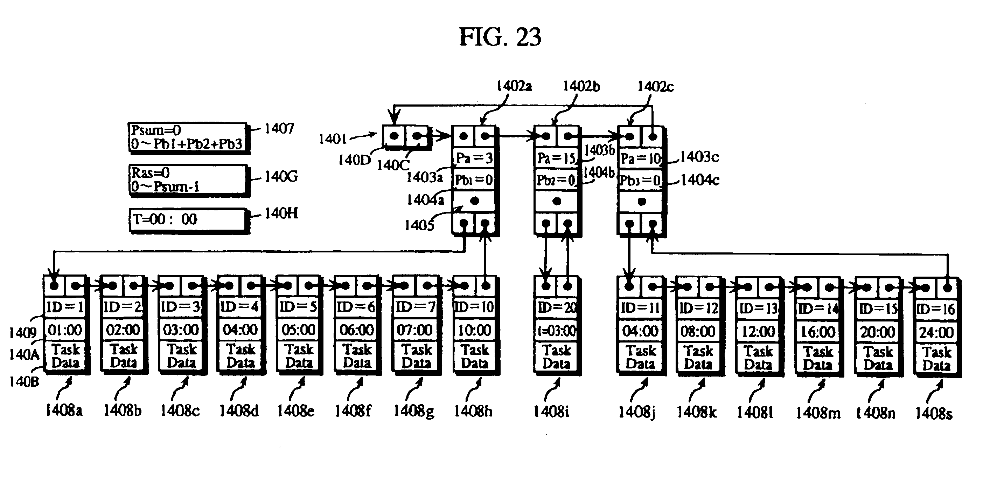

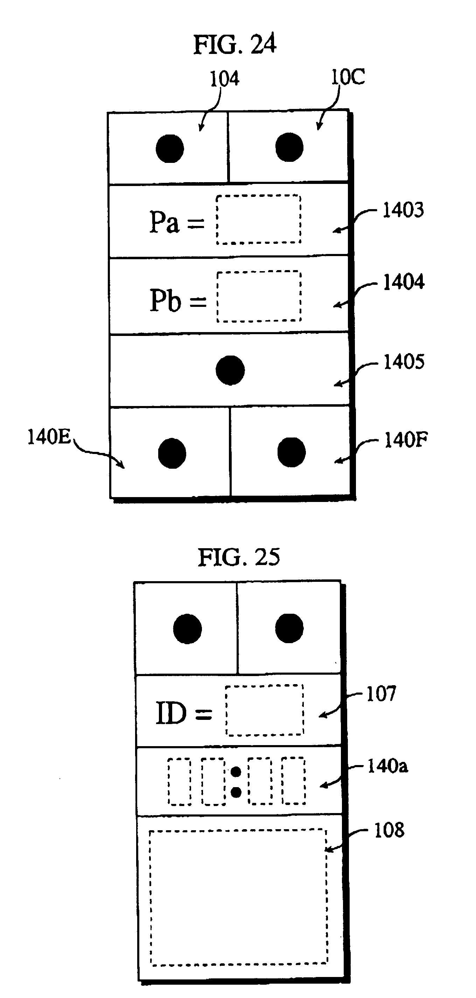

The data construction of the management/selection lists in this second embodiment is shown in Fig. 23. Here, while the sets of task selection data 1408a-1408s shown in Fig. 23 have an identifier 107 and a context 108 as in the first embodiment, they are further provided with a deadline 140A, as shown in Fig.25, which is new to this embodiment.

By looking at the deadline columns 140A of sets of task selection data 1408a to 1408h, it can be seen that the deadlines 140A "01:00", "02:00", "03:00", "04:00", "05:00", ... "09:00", "10:00" are set at one-minute intervals. In the same way, by looking at the deadline columns 140A of sets of task selection data 1408j to 1408s, it can be seen that the deadlines 140A "04:00", "08:00", "12:00", "16:00", "20:00" ... are set at four-minute intervals. In this way, it can be seen from Fig. 23 that tasks having short execution cycles are coexistent with tasks having long execution cycles.

As shown by the data format in Fig. 24, the priority management labels in the second embodiment are each provided with an order direction link 104 and a reverse direction link 10C to link them in the same way as in the first embodiment. However, the priority management labels in the present embodiment differ by having the priority column divided into a standard priority column 1403 and an effective priority column 1404, and by being provided with a deadline pointer 1405.

The standard priority column 1403 is used to record the priority which represents a plurality of sets of task selection data. In Fig. 23, the sets of task selection data 1408a -1408h which have the short execution cycle of one minute are represented by the priority management label 1402a which has the priority "3" written in its standard priority column 1403a, while the sets of task selection data 1408j -1408s which have the longer execution cycle of four minutes are represented by the priority management label 1402c which has the priority "10" written in its standard priority column 1403c. In Fig. 23, the priority management label 1402b represents only the set of task selection data 1408i and is set the highest of these priorities, "15".

In this example, the priority of the priority management label 1402c is higher than that of the priority management label 1402a since the tasks represented by task selection data 1408j-1408s, despite having longer execution cycles, need to be performed with greater precision. Conversely, the priority of the priority management label 1402a is lower than that of the priority management label 1402c since the tasks represented by task selection data 1408a-1408h, despite having shorter execution cycles, do not need to be performed with as great precision as the other tasks represented in the selection list. Task selection data 1408 whose deadline is the current time are assigned sooner time slices in accordance with the magnitude of the effective priority in their priority management labels 1402, so that task selection data 1408 whose deadline is the current time and whose effective priority in the priority management labels 1402 are lower are assigned later time slices.

When a plurality of sets of task selection data 1408 have a same deadline, the task with the highest effective priority in its priority management label 1402 will be executed on reaching this deadline, with the task of the task selection data 1408 with the second highest priority being executed 10 msec (the time taken by one time slice) after its deadline. Following this, the task of the task selection data 1408 with the third highest priority is executed 20 msec (the time taken by two time slices) after its deadline and the task of the task selection data 1408 with the fourth highest priority is executed 30 msec (the time taken by three time slices) after its deadline.

The deadline pointer 1405 connects tasks whose deadline has been reached by the present time, and tasks whose deadline has already been passed, to their respective priority management labels 1402.

The effective priority 1404 of tasks whose deadline has been reached by the present time, and tasks whose deadline has already been passed are updated to the standard priorities. In Fig. 23, the effective priorities 1404a, 1404b, and 1404c are all zero since the present time is "00:00", so that the present time does not correspond to the deadline of any of the tasks.

The total priority column 1407 is used by the control unit 23 to record the total of the effective priorities.

The random number column 140G is used by the control unit 23 to store a random number which it generates in the integer range between zero and the (total priority minus one).

The following is an explanation of the selection method used for the data construction described above.

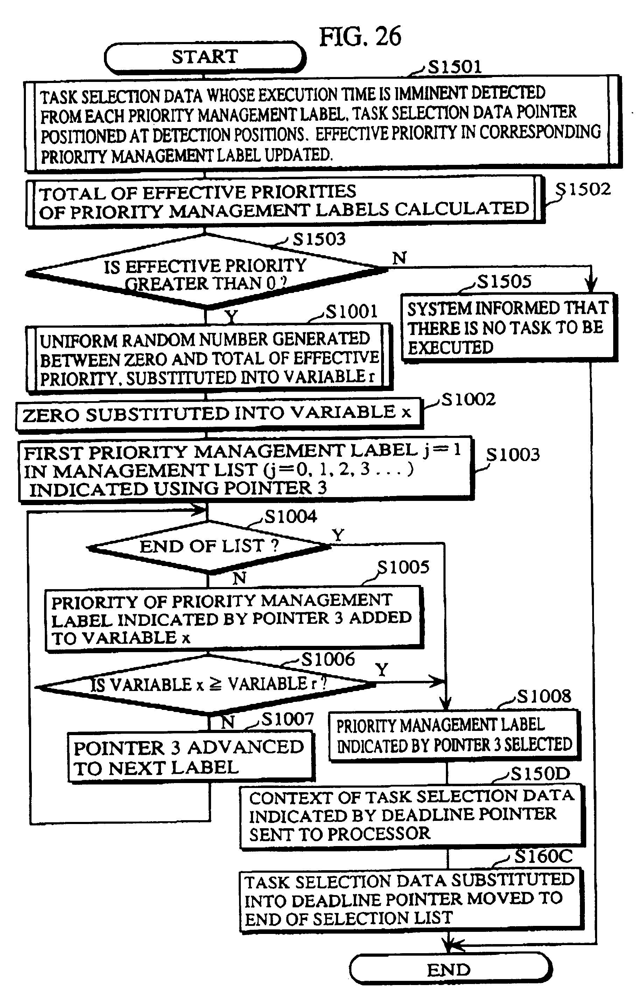

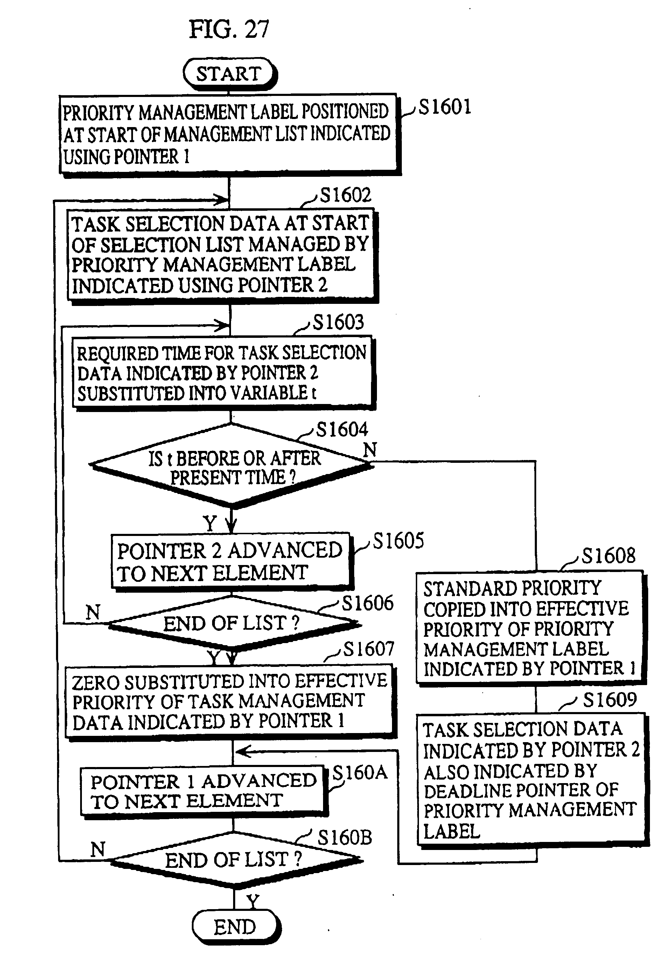

Figs. 26 and 27 are flowcharts for the processing in the selection method used in the present embodiment. In the flowchart in Fig. 26, variable r is a variable for storing the value of a uniform random number which is generated between zero and the total of effective priorities in step S1001, and pointer 3 is a provided for indicating a present priority management label when tracing through the management list from start to end. Additionally, variable x is provided for storing a total of the priority between a first priority management label in the management list and a priority management label indicated by the pointer 3.

[Case when present time is "01=00"]

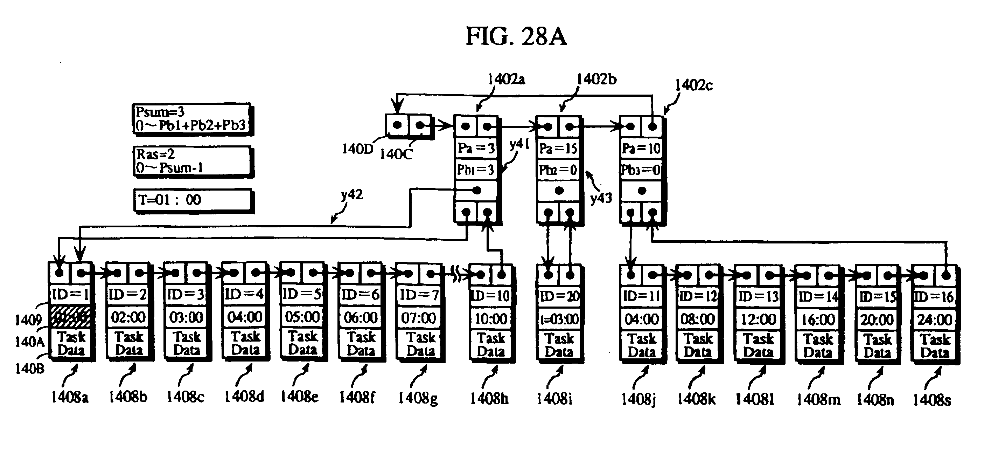

The following is an explanation of the operation of the control unit 23 when the present time is "01:00", with reference to Fig. 28A.

Step S1501 is a call step which calls the flowchart in Fig. 27. In the flowchart in Fig. 27, pointer 1 is a pointer for indicating a present priority management label when tracing through the management list from start to end. Pointer 2 is a pointer for indicating a present set of task selection data when tracing through the task selection data for the priority management label indicated by pointer 1. Finally, variable t is a variable for storing the deadline of the set of task selection data indicated by pointer 2.

In step S1601, pointer 1 is positioned at the front of the management list. In the present example, pointer 1 indicates priority management label 1402a which is located at the front of the management list. Following this, pointer 2 is positioned at the front of the selection list for priority management label 1402a, which, in the present example, is the task selection data 1408a. In step S1603, the deadline of the task selection data indicated by pointer 2 is written into the variable t, which in the present example is "01:00".

In step S1604, it is judged whether the deadline written into variable t is ahead of the present time. If this is the case, the processing proceeds to step S1605, or if not, the processing advances to step S1608. Here, since the deadline of task selection data 1408a written into variable t is "01:00" which is the present time, the judgement "No" is given in step S1604 and the processing advances to step S1608. In step S1608, the standard priority Pa is copied into the effective priority Pb of the priority management label 1402a.

In the present example, the priority "3" in the standard priority column is written into the effective priority column of the priority management label 1402a, as shown by the arrow y41 in Fig. 28A.

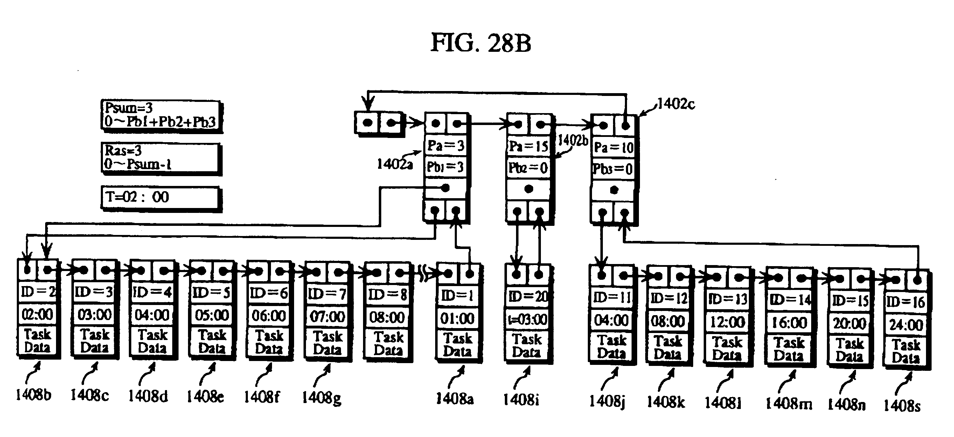

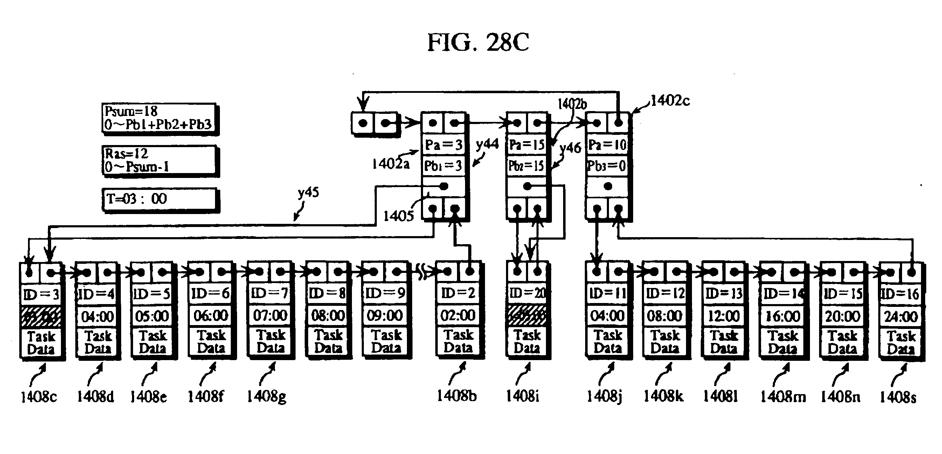

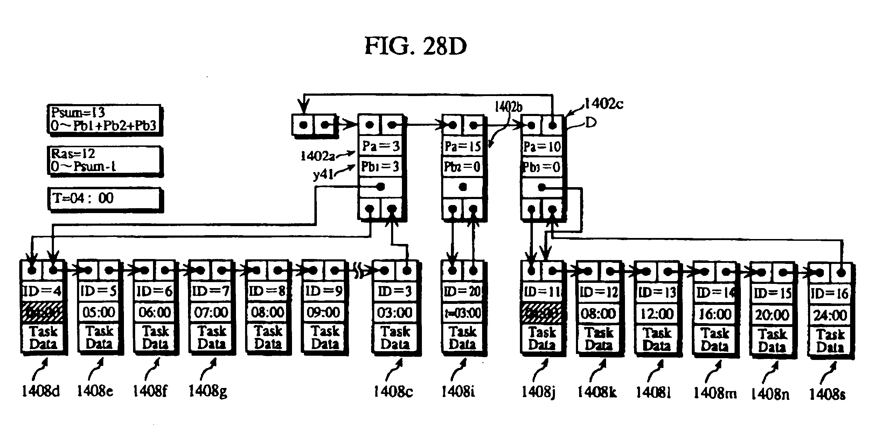

In step S1609, the task selection data 1408a indicated by pointer 2 is indicated by the deadline pointer of priority management label 1402a. As a result, the deadline pointer of the priority management label 1402a indicates task selection data 1408a, as shown by the arrow y42 in Fig. 28. The processing then advances to step S160A where the pointer 1 is advanced to the next priority management label 1402b.

In step S160B, it is judged whether pointer 1 is at the end of the management list. Here, this judgement is performed by detecting a reverse order link of a priority management label, and since this is not the case in the present example, the processing returns to step S1602.

In step S1602, pointer 2 is positioned so as to indicate the first set of task selection data in the selection list for the priority management label 1402b indicated by pointer 2.

Since only task selection data 1408i is linked to the order direction link of the task selection data marker of priority management label 1402b, pointer 2 is set to indicate task selection data 1408i in step S1602, and in step S1603, the deadline "03:00" of task selection data 1408i is written into variable t.

In step S1604, it is judged whether the deadline written into variable t is ahead of the present time. If this is the case, the processing proceeds to step S1605, or if not, the processing advances to step S1608. Here, since the deadline of task selection data 1408a written into variable t is "03=00" which is the ahead of the present time "03:00", the judgement "Yes" is given in step S1604 and the processing advances to step S1605 where pointer 2 is advanced to the next set of task selection data 1408. In step S1606, it is judged whether pointer 2 is positioned at the end of the selection list. Here, this judgement is performed by detecting the end of the reverse order link of the task selection data. Since this is the case, the processing advances to S1607, where the effective priority of the priority management label 1402b is set to zero, as indicated by arrow y43 in Fig. 28A. After this, pointer 1 is incremented by one to indicate priority management label 1402c and it is judged in step S160B whether pointer 1 is indicating end of the management list. Since this is not the case, the processing returns to S1602.

In step S1602, pointer 2 is set to indicate the first set of task selection data at the front of the selection list for priority management label S1402c.

The task selection data at the front of the selection list for priority management label S1402c is task selection data S1408j, so that task selection data S1408j is indicated by pointer 2. In step S1603, the deadline "04:00" of task selection data 1408j is written into variable t.

In step S1604, it is judged whether the deadline written into variable t is ahead of or behind the present time. If this is the case, the processing proceeds to step S1605, or if not, the processing advances to step S1608. Since the present time is "01:00", the judgement is yes, so that in step S1605, pointer 2 is advanced to the next set of task selection data 1408k. In step S1606, it is judged whether pointer 2 is positioned at the end of the selection list. Here, task selection data 1408j - 1408s are present in the current selection list, with each having a deadline which is after "04:00", so that as with the priority management label 1402a, the processing will be repeated six times until the end of the selection list. At that point, the judgement "Yes" is given in step S1608B, the processing in Fig. 27 is completed, and the processing returns to step S1502 in Fig. 26.

In step S1502 in Fig. 26, the total of the effective priorities in the sets of task selection data is calculated. Since the effective priorities of the sets of priority management labels 1402a, 1402b, and 1402c in Fig. 28A are "3", "0", and "0", the total is calculated as "3".

In step S1503, it is judged whether the total of effective priorities Pb is greater than zero. If so, the processing advances to S1504, or if not, the processing advances to S1505. In the present example, the total of effective priorities Pb is "3", so that the processing advances to S1504. Hereafter, the processing in steps S1002-S1008 is the same as in the first embodiment.

In step S1001, a uniform random number is generated for the range between zero and the total priority value and is substituted into variable r. The following explanation deals with the case when the generated variable r is "2". Following step S1001, zero is substituted into variable x in step S1002, and in step S1003, the priority management label 1402a at the front of the management list is indicated by pointer 3. Steps S1005-S1007 are then repeated. In step S1005, the priority of the priority management label 1402a is added to the variable x. Following this, in step S1006, it is judged whether variable x is equal to or greater than variable r.

For the present example, the priority "3" of the priority management label 1402a indicated by the pointer 3 is added to variable x and it is judged whether variable x is equal to or greater than variable r. Since the value of variable x, "3", is greater than variable r, "2", the processing advances to step S1008, where the priority management label 1402a indicated by pointer 3 is selected. In step S150D, the task of the set of task selection data indicated by the deadline pointer is executed by the processor. Following this, the processing advances to step S160C and the task selection data which was indicated by the deadline pointer is moved to the end of the selection list.

[Case when present time is "02:00"]

The following is an explanation of the operation of the control unit 23 when the present time is "02:00", with reference to Fig. 28B.

In step S1601, pointer 1 is positioned at the front of the management list. In the present example, pointer 1 indicates priority management label 1402a which is located at the front of the management list. Following this, pointer 2 is positioned at the front of the selection list for priority management label 1402a.

As shown in Fig. 28B, task selection data 1408a has been moved to the end of the selection list for priority management label 1402a, so that task selection data 1408b is now located at the front of the selection list and so os linked to the order direction link of the task selection data marker of priority management label 1402a. In step S1603, the deadline of the task selection data indicated by pointer 2 is written into the variable t, which in the present example is "02:00".

In step S1604, it is judged whether the deadline written into variable t is ahead of the present time. Here, since the deadline of task selection data 1408b written into variable t is "02:00" which is the present time, the judgement "No" is given in step S1604 and the processing advances to step S1608. In step S1608, the standard priority Pa is copied into the effective priority Pb of the priority management label 1402a indicated by pointer 1.

In Fig. 27B, only task selection data 1408b has a deadline "02:00", so that in the previous example where task selection data 1408a has the deadline "01:00", only the effective priority of the priority management label 1402a which represents task selection data 1408b is amended to "3". As a result, the total 1407 of effective priorities is calculated as "3", a random number in the range 0-3 is generated and the task selection data 1408b is selected.

[Case when present time is "03:00"]

The following is an explanation of the operation of the control unit 23 when the present time is "03:00", with reference to Fig. 28C.

In step S1601, pointer 1 is positioned at the front of the management list. In the present example, pointer 1 indicates priority management label 1402a which is located at the front of the management list. Following this, pointer 2 is positioned at the front of the selection list for priority management label 1402a.

As shown in Fig. 28B, the executed task selection data 1408b has been moved to the end of the selection list for priority management label 1402a, so that task selection data 1408c is now located at the front of the selection list. In step S1603, the deadline of the task selection data 1408c indicated by pointer 2 is written into the variable t, which in the present example is "03:00".

In step S1604, it is judged whether the deadline written into variable t is ahead of the present time. Here, since the deadline of task selection data 1408c written into variable t is "03:00" which is the present time, the judgement "No" is given in step S1604 and the processing advances to step S1608, where the standard priority Pa is copied into the effective priority Pb of the priority management label 1402a indicated by pointer 1.

As a result, the priority "3" in the standard priority column is written into the effective priority column of the priority management label 1402a, as shown by the arrow y44 in Fig. 28C.

In step S1609, the task selection data 1408c indicated by the pointer 2 is indicated by the deadline pointer of the priority management label 1402a indicated by the pointer 1. This is shown by the arrow y45 in Fig. 28C. Following this, the processing advances to step S160A and pointer 1 is moved to the next priority management label 1402b.

Next, in step S160B, it is judged whether pointer 1 is at the end of the management list. Since this is not the case in the present example, the processing returns to step S1602.

In step S1602, pointer 2 is positioned so as to indicate the first set of task selection data 1408i in the selection list for the priority management label 1402b indicated by pointer 2. In step S1603, the deadline "03:00" of task selection data 1408i is written into variable t.

In step S1604, it is judged whether the deadline written into variable t is ahead of or behind the present time. Since the present time is "03:00", the judgement is "No", so that in step S1608, where the standard priority Pa is copied into the effective priority Pb of the priority management label 1402b indicated by pointer 1.

As a result, the priority "15" in the standard priority column is written into the effective priority column of the priority management label 1402b, as shown by the arrow y46 in Fig. 28C.

In step S160A, pointer 1 is moved to the next priority management label 1402c and in step S160B, it is judged whether pointer 1 is at the end of the management list. Since this is not the case in the present example, the processing returns to step S1602.

In step S1602, pointer 2 is positioned so as to indicate the first set of task selection data 1408j in the selection list for the priority management label 1402c indicated by pointer 2. In step S1603, the deadline "04:00" of task selection data 1408i is written into variable t. Since the remaining sets of task selection data 1408j - 1408s in the selection list for priority management label 1402c have deadlines which are "04:00" or after, the judgement "Yes" is given in S1604" and the processing is repeated six times until the pointer 2 reaches the end of the list. At that point, the judgement "Yes" is given in step S1608B, the processing in Fig. 27 is completed, and the processing returns to step S1502 in Fig. 26.

In step S1502 in Fig. 26, the total of the effective priorities in the sets of task selection data is calculated. Since the effective priorities of the sets of priority management labels 1402a, 1402b, and 1402c in Fig. 28C are "3", "15", and "0", the total is calculated as "18".

In step S1503, it is judged whether the total of effective priorities Pb is greater than zero. Since this is the case, the processing in steps S1002-S1008 are executed as before.

In step S1001, a uniform random number is generated for the range between zero and the total priority value "18" and is substituted into variable r. The following explanation deals with the case when the generated variable r is "12". Following step S1001, zero is substituted into variable x in step S1002, and in step S1003, the priority management label 1402a at the front of the management list is indicated by pointer 3. Steps S1005-S1007 are then repeated. In step S1005, the priority of the priority management label 1402a is added to the variable x. Following this, in step S1006, it is judged whether variable x is equal to or greater than variable r. For the present example, the priority "3" of the priority management label 1402a indicated by the pointer 3 is added to variable x, but since the value of variable x, "3" is less than variable r, "12", the processing advances to step S1007. In step S1007, the pointer 3 is moved to the next priority management label, in this case, priority management label 1402b. The processing then returns to step S1004 where it is judged whether the pointer 3 is indicating the end of the management list. This is not the case, so that the priority "15" of the priority management label 1402b indicated by the pointer 3 is added to variable x, and it is judged that the value of variable x, "18" is greater than variable r, "12", so that the processing advances to step S1008. In step S1008, the priority management label 1402b indicated by pointer 3 is selected. In step S150D, the task of the set of task selection data 1408i with the deadline "03:00" indicated by the deadline pointer of priority management label 1402b is executed by the processor at time "03:00". Following this, the task of the set of task selection data 1408c with the deadline "03:00" indicated by the deadline pointer of priority management label 1402a is executed by the processor in the time slice starting at "03:00.010".

By means of the above operation, the task with the priority "15" can be performed at time slice "03:00" without delay, while the task with the lower priority "3", reflecting a lower degree of accuracy, can be performed at time slice "03:00.010" with a delay of only one time slice at most.

[Case when present time is "04:00"]

The following is an explanation of the operation of the control unit 23 when the present time is "03:00".

In step S1601, pointer 1 is positioned at the front of the management list. In the present example, pointer 1 indicates priority management label 1402a which is located at the front of the management list. Following this, pointer 2 is positioned at the front of the selection list for priority management label 1402a.

The executed task selection data 1408c has been moved to the end of the selection list for priority management label 1402a, so that task selection data 1408d is now located at the front of the selection list. In step S1603, the deadline of the task selection data 1408d indicated by pointer 2 is written into the variable t, which in the present example is "04:00".

In step S1604, it is judged whether the deadline written into variable t is the present time "04:00", so that the processing advances to step S1608, where the standard priority Pa is copied into the effective priority Pb of the priority management label 1402a indicated by pointer 1. As a result, the effective priority Pb becomes "3".

Next, the pointer is advanced to priority management label 1402b.

The pointer is positioned at the task selection data 1408i in the selection list for priority management label 1402b. In step S1603, the deadline of the task selection data 1408i indicated by pointer 2 is written into the variable t, which in the present example is "03:00". Since this is not the present time, the pointer 2 is advanced in step S1605. Since the selection list for priority management label 1402b only contains task selection data 1408i, the pointer 2 reaches the end of the list and in step S160A, pointer 1 is advanced to the next priority management label, priority management label 1402c, and the processing returns to step S1602.

In step S1602, pointer 2 is positioned at the front of the selection list for priority management label 1402c. Here, task selection data 1408j which has the deadline "04:00" is located at the front of the selection list. In step S1603, the deadline of the task selection data 1408j indicated by pointer 2 is written into the variable t, which in the present example is "04:00". Since this is the present time, the judgement "No" is given in S1604, and the processing advances to step S1608, where the standard priority Pa is copied into the effective priority Pb of the priority management label 1402c indicated by pointer 1. As a result, the effective priority Pb becomes "10". Here, the processing in Fig. 27 is completed, and the processing returns to step S1502 in Fig. 26.

In step S1502 in Fig. 26, the total of the effective priorities in the sets of task selection data is calculated. Since the effective priorities of the sets of priority management labels 1402a, 1402b, and 1402c in Fig. 28C are "3", "0", and "10", the total is calculated as "13".

In step S1503, it is judged whether the total of effective priorities Pb is greater than zero. Since this is the case, the processing in steps S1002-S1008 are executed as in the first embodiment.

In step S1001, a uniform random number is generated for the range between zero and the total priority value "13" and is substituted into variable r. The following explanation deals with the case when the generated variable r is "12". Following step S1001, zero is substituted into variable x in step S1002, and in step S1003, the priority management label 1402a at the front of the management list is indicated by pointer 3. Steps S1004-S1007 are then repeated. In step S1004, it is judged whether pointer 3 is positioned at the end of the management list. In step S1005, the priority of the priority management label 1402a is added to the variable x. Following this, in step S1006, it is judged whether variable x is equal to or greater than variable r. For the present example, the priority "3" of the priority management label 1402a indicated by the pointer 3 is added to variable x, but since the value of variable x, "3" is less than variable r, "12", the processing advances to step S1007. In step S1007, the pointer 3 is moved to the next priority management label, in this case, priority management label 1402b. The processing then returns to step S1004 where it is judged whether the pointer 3 is indicating the end of the management list. This is not the case, so that the priority "0" of the priority management label 1402b indicated by the pointer 3 is added to variable x, and it is judged that the value of variable x, "3" is less than variable r, "12", so that the processing advances to step S1007. In step S1007, the pointer 3 is moved to the next priority management label, in this case, priority management label 1402c. The processing then returns to step S1004 where it is judged whether the pointer 3 is indicating the end of the management list. This is not the case, so that the priority "10" of the priority management label 1402c indicated by the pointer 3 is added to variable x, and it is judged that the value of variable x, "13" is greater than variable r, "12", so that the processing advances to step S1008. In step S1008, the priority management label 1402c indicated by pointer 3 is selected. In step S150D, the task of the set of task selection data 1408j with the deadline "04:00" indicated by the deadline pointer of priority management label 1402c is executed by the processor at time "04:00". Following this, the task of the set of task selection data 1408d with the deadline "04:00" indicated by the deadline pointer of priority management label 1402a is executed by the processor in the time slice starting at "04:00.010".

As described above, the task selection data 1408 with four-minute intervals which were given the high priority are executed precisely at the time slice indicated by their deadlines. Conversely, the task selection data 1408 with one-minute intervals which were given the low priority are only executed after the task selection data 1408 with four-minute intervals has been executed.

By means of the above construction, tasks with the four-minute interval are given priority over the one-minute tasks when there is conflict between the two. By doing so, despite having longer execution intervals, the tasks with higher priority can be given proper precedence. As a result, audio decoding tasks with long execution intervals can be performed on time in real time processing with priority over video data decoding tasks which need frequent short executions.

The present invention has been explained with reference to the above embodiments, although these should not be construed as limitations on the usage of the present invention. Six possible modifications are described below.

(a) While the first and second embodiment were described as using uniform random numbers, Gaussian random number or any random number which avoids "lock out" may be used. It should also be clear that these do not require a Markov process.

(b) In the second embodiment, the priority management labels for tasks to be executed were set non-zero priorities, although since the object of the present invention is to set priorities for tasks which must be performed at the same time, by narrowing the range of random numbers, the task for a given priority management label can be chosen in a specified condition. If the random number is always "1", for example, the priority management label closest to the priority management label marker may always be selected, for example.

c. While both embodiments used a "round-robin" method, although a combination of the conventional "priority adopted round-robin method" and "discrete processing" may be used for task selection.

d. Both embodiments describe the case where there is only one priority management label for each priority, although, provided priority does not simply rise with the number of tasks, it should be clear that the execution probability of high-priority tasks need not fall when a plurality of such labels are present.

e. While data was managed in lists in the embodiments, tables or other data constructions may be used to save storage space.

f. Both embodiments described a single-processor system out of convenience, although it should be obvious that they may be used for a multi-processor system.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. A task management apparatus comprising a management list for managing sets of task information that each represent an execution of a task and a scheduler that has tasks alternately executed by a processor,

   wherein the management list includes:
   a priority list which is a sequence of priority labels which each represent a different priority, wherein each priority label is linked to a set of task information which has the same priority as the priority label; and
   a task information list which is a sequence of a plurality of sets of task information having a same priority, with a set of task information which is linked to a priority label at the front,
   and wherein the scheduler includes:
   selection means for selecting a priority label, based on priority; and
   execution control means for having a processor execute a task represented by a set of task information, based on the set of task information linked to the selected priority label.

2. The task management apparatus of Claim 1, wherein the selection means includes:

   a totaling unit for totaling up the priorities in the priority list;
   an allocation unit for allocating a series of integers within a range from zero to the total to each priority label, according to the priority of each priority label;
   a random number generation unit for generating a random number within the range from zero to the total; and
   a determination unit for determining which priority label has been allocated an integer series which includes the generated random number,
   and wherein the execution control means includes a first control unit for controlling the processor, based on the set of task information linked to the priority label determined by the determination unit.

3. The task management apparatus of Claim 2, wherein the execution control means includes a second control unit for moving a set of task information for an executed task from the front of the task information list to the back, in doing so moving following sets of task information forward.

4. The task management apparatus of Claim 3, wherein each set of task information correlates with information regarding hardware when an execution of the task represented by the set of task information is interrupted.

5. The task management apparatus of Claim 4 includes:

   first detection means for detecting the priority of a newly generated task;
   determination means for determining whether a priority label which shows the same priority as the detected priority already exists in the priority list;
   first linking means for forming, when said priority label already exists, a link between sets of task information which are already linked to the detected priority label and a set of task information for the newly generated task;
   appending means for appending, when no priority label with the detected priority exists, a priority label which represents the detected priority to the priority list; and
   second linking means for forming a link between the added priority label and the newly generated task.

6. A task management apparatus comprising a scheduler which has a plurality of tasks executed by a processor, wherein each task represented by a set of task information including a deadline that shows an execution cycle and a priority that shows a required punctuality for the deadline, wherein the scheduler comprises:

timer means for measuring current time;

detection means for detecting all each set of task information whose deadline is within a given time period from the current time;

selection means for selecting one out of the detected sets of task information, based on the priorities; and

execution control means for controlling the processor, based on the selected set of task information.

7. The task management apparatus of Claim 6, further comprising:

a priority list which is a sequence of priority labels which each represent a different priority, wherein each priority label is linked to a set of task information which has the same priority as the priority label; and

a task information list which is a sequence of a plurality of sets of task information having a same priority, with a set of task information which is linked to a priority label at the front,

wherein the detection means detects all the sets of task information in each task information list whose deadlines are imminent, and

wherein the selection means includes:

a detection unit for detecting a priority label which is linked to a set of task information detected by the detection means; and

a selection unit for selecting a priority label with based on priority, out of the priority labels detected by the detection unit.

8. The task management apparatus of Claim 7, wherein the selection means further includes:

a totaling unit for totaling up the priorities in the priority list;

an allocation unit for allocating a series of integers within a range from zero to the total to each priority label, according to the priority of each priority label;

a random number generation unit for generating a random number within the range from zero to the total; and

a determination unit for determining which priority label has been allocated an integer series which includes the generated random number,

wherein the selection unit selects a set of task information which is linked to the priority label determined by the determination unit.

9. The task management apparatus of Claim 3, wherein each set of task information correlates with information regarding hardware when an execution of the task represented by the set of task information is interrupted.

FIG. 1 PRIOR ART

NATIVE VALUE

VARIES WITH ORDER
USED TO DETERMINE
EXECUTION ORDER

| | 302d | 302c | 302b | 302a |
|---|---|---|---|---|
| Pa | Pa = 1 | Pa = 6 | Pa = 6 | Pa = 6 |
| Pb | Pb = 1 | Pb = 9 | Pb = 12 | Pb = 15 |
| ID | ID = 4 | ID = 1 | ID = 2 | ID = 3 |
| | Task Data | Task Data | Task Data | Task Data |

301
303
304
305
306

## FIG. 2A PRIOR ART

## FIG. 2B PRIOR ART

FIG. 3   PRIOR ART

701

703  $P_1 = 15$

$ID = 3$

Psum=38   704   Task Data

706   705

702a

$r = 17$

707

$0 \sim P_1-1$ SELECTED WHEN GENERATED RANDOM NUMBER IS 0–14

$P_2 = 10$

$ID = 2$

Task Data

702b

$P_1 \sim P_1+P_2-1$ SELECTED WHEN GENERATED RANDOM NUMBER IS 15–24

$P_3 = 10$

$ID = 1$

Task Data

702c

$P_1+P_2 \sim P_1+P_2+P_3-1$ SELECTED WHEN GENERATED RANDOM NUMBER IS 25–34

$P_4 = 3$

$ID = 4$

Task Data

702d

$P_1+P_2+P_3 \sim P_1+P_2+P_3+P_4-1$ SELECTED WHEN GENERATED RANDOM NUMBER IS 35–37

# FIG. 4

# FIG. 5 PRIOR ART

901

Psum=118

906

r=17
(0~117)

907

P=15
ID=3
Task
Data

902a

P=10
ID=2
Task
Data

902b

P=10
ID=2
Task
Data

P=10
ID=2
Task
Data

P=10
ID=2
Task
Data

P=10
ID=2
Task
Data

P=10
ID=2
Task
Data

P=10
ID=2
Task
Data

P=10
ID=2
Task
Data

P=10
ID=2
Task
Data

P=10
ID=2
Task
Data

P=3
ID=4
Task
Data

10 SETS OF TASK SELECTION DATA

EP 0 790 557 A2

FIG. 6

EP 0 790 557 A2

# FIG. 7

## CONSTRUCTION OF SCHEDULER

CONTROL UNIT /23

RANDOM NUMBER GENERATING UNIT /22

/21

### MANAGEMENT/SELECTION LISTS

| $0 \sim P_1-1$ $(0\sim9)$ | $P_1 \sim P_1+P_2-1$ $(10\sim12)$ | $P_1+P_2 \sim P_1+P_2+P_3-1$ $(13\sim27)$ |

Psum = 28  ~105

random = *
0~27  ~10D

101

10A  109  102a  $P_1=10$

102b  $P_2=3$  102c  $P_3=15$

107a

ID=1  ID=1  ID=1  ID=1  ID=1  ID=1  ID=2  ID=3

Task Data (×8)

108

106a  106b  106c  106d  106e  106f  107g  107h

106g  106h

EP 0 790 557 A2

# FIG. 8

# FIG. 9

## FIG. 10

```
                    ┌─────────────┐
                    │    START    │
                    └─────────────┘
                           │
┌──────────────────────────────────────┐
│ UNIFORM RANDOM NUMBER GENERATED        │ ⟋S1001
│ BETWEEN ZERO AND TOTAL OF EFFECTIVE    │
│ PRIORITY, SUBSTITUTED INTO VARIABLE r  │
└──────────────────────────────────────┘
                           │
        ┌──────────────────────────────────┐
        │ ZERO SUBSTITUTED INTO VARIABLE x  │ ⟋S1002
        └──────────────────────────────────┘
                           │
┌──────────────────────────────────────┐
│ FIRST PRIORITY MANAGEMENT LABEL j=1 IN │ ⟋S1003
│ MANAGEMENT LIST (j=1.2.3.4···M) INDICATED│
│ USING POINTER 3                        │
└──────────────────────────────────────┘
                           │
                           ▼
                ◇ END OF LIST ? ◇────── Y ──────┐  S1004
                           │                      │
                           N                      │
        ┌──────────────────────────────┐          │
        │ PRIORITY OF PRIORITY MANAGEMENT│ S1005    │
        │ LABEL INDICATED BY POINTER 3   │          │
        │ ADDED TO VARIABLE x            │          │
        └──────────────────────────────┘          │
                           │                      │
                ◇ IS VARIABLE x ≧ VARIABLE r ? ◇── Y ──┐  S1006
                           │                           │
                           N   S1007                    │
        ┌──────────────────────┐   ┌──────────────────────────┐
        │ POINTER 3 ADVANCED    │   │ PRIORITY MANAGEMENT       │ S1008
        │ TO NEXT LABEL         │   │ LABEL m INDICATED BY      │
        └──────────────────────┘   │ POINTER 3 SELECTED        │
                                    └──────────────────────────┘
                                              │
                                              ▼
                                            ( 1 )
```

## FIG. 11

(1)

S1010
FIRST SET OF TASK SELECTION DATA IN SELECTION LIST INDICATED USING POINTER 2

S1011
ARE THERE A PLURALITY OF SETS OF TASK MANAGEMENT DATA MANAGED BY THE PRIORITY MANAGEMENT LABEL INDICATED BY POINTER ?

No

Yes

S1020
MEMORIZE ORDER OF IDENTIFICATION NUMBERS IN SELECTION LIST OF PRIORITY MANAGEMENT LABEL m (SETS OF TASK SELECTION DATA NUMBERED AS TASK SELECTION DATA 1,TASK SELECTION DATA 2,TASK SELECTION DATA 3, · · · · TASK SELECTION DATA n IN ACCORDANCE WITH PREVIOUS ORDER)

S1021
DELETION OF LINK BETWEEN ORDER DIRECTION LINK OF PRIORITY MANAGEMENT LABEL m AND SET OF TASK SELECTION DATA 1 AT START OF LIST

S1022
DELETION OF LINK BETWEEN TASK SELECTION DATA 1 AND TASK SELECTION DATA 2

S1023
DELETION OF LINK BETWEEN REVERSE ORDER LINK OF PRIORITY MANAGEMENT LABEL m AND TASK SELECTION DATA n AT END OF LIST

S1024
LINK ESTABLISHED BETWEEN ORDER DIRECTION LINK OF PRIORITY MANAGEMENT LABEL m AND TASK SELECTION DATA 2

S1025
LINK ESTABLISHED BETWEEN TASK SELECTION DATA n AND TASK SELECTION DATA 1

S1026
LINK ESTABLISHED BETWEEN TASK SELECTION DATA 1 AND REVERSE DIRECTION LINK OF PRIORITY MANAGEMENT LABEL m

S1012
TASK OF TASK SELECTION DATA INDICATED BY POINTER 2 EXECUTED BY PROCESSOR

END

## FIG. 12

( SYSTEM ACTIVATED )

IDENTIFICATION NUMBER ASSIGNED TO EACH APPLICATION k TO BE LOADED (k=1,2,3 · · · · k) — m1

TASK SELECTION DATA k (k=1,2,3 · · · · k) GENERATED FOR EACH IDENTIFICATION NUMBER (k=1,2,3 · · · · k) — m2

PRIORITY p(p=1,2,3 · · · · p) SET FOR EACH APPLICATION K TO BE LOADED (k=1,2,3 · · · · k) — m3

PRIORITY MANAGEMENT LABELS p (p=1,2,3 · · · · p) GENERATED — m4

HIGHEST PRIORITY DETERMINED AS PRIORITY MANAGEMENT LABEL 1 — m5

LINK ESTABLISHED FROM ORDER DIRECTION LINK OF PRIORITY MANAGEMENT LABEL MARKER TO PRIORITY MANAGEMENT LABEL 1 — m6

LINKS ESTABLISHED BETWEEN PRIORITY MANAGEMENT LABELS FROM HIGHEST PRIORITY TO LOWEST — m7

LINK ESTABLISHED BETWEEN PRIORITY MANAGEMENT LABEL p=P AND PRIORITY MANAGEMENT LABEL MARKER REVERSE ORDER LINK — m8

TASKS WITH EQUAL PRIORITY OUT OF ALL APPLICATIONS GROUPED TOGETHER — m9

SETS OF TASK SELECTION DATA IN EACH GROUP ARRANGED INTO SEQUENCES FOR EACH APPLICATION — m10

LINKS ESTABLISHED BETWEEN SETS OF TASK SELECTION DATA IN EACH SEQUENCE — m11

LINK ESTABLISHED FROM ORDER DIRECTION LINK OF THE TASK SELECTION DATA MARKER OF THE PRIORITY MANAGEMENT LABEL TO THE FIRST SET OF TASK SELECTION DATA IN EACH SEQUENCE — m12

LINK ESTABLISHED FROM THE TASK SELECTION DATA AT THE END OF EACH SEQUENCE TO THE REVERSE ORDER LINK OF THE TASK SELECTION DATA MARKER IN THE PRIORITY MANAGEMENT LABEL

TOTAL OF PRIORITIES OF ALL PRIORITY MANAGEMENT LABELS CALCULATED — m13

( END ) — m14

# FIG. 13

START

V1

PRIORITY MANAGEMENT LABEL p GENERATED FROM EACH APPLICATION k (k=0.1.2.3 · · · · · K)

V2

k=0、 p=0

V3

BUFFER =0

V4

PRIORITY k OF EACH APPLICATION k TO BE LOADED WRITTEN INTO BUFFER

V5

PRIORITY k =PRIORITY k-1?  Y

N

V6

PRIORITY MANAGEMENT LABEL p GENERATED FOR PRIORITY k

V7

p=p+1

k=k+1

END

FIG. 14

```
                        ┌─────────┐
                        │  START  │
                        └─────────┘
                             │
        ┌─────No──────◇ APPLICATION SELECTED ? ◇──t1
        │                    │ Yes
        │            ┌────────────────────────────────────┐
        │            │ PRIORITY SET FOR SELECTED APPLICATION x │ t2
        │            └────────────────────────────────────┘
```

APPLICATION x ASSIGNED AN IDENTIFICATION NUMBER k=K+1    t3

TASK SELECTION DATA k=K+1 GENERATED FOR IDENTIFICATION NUMBER k=K+1    t4

PRIORITY SET FOR APPLICATION x    t5

IS THERE AN EXISTING PRIORITY MANAGEMENT LABEL p(p=1,2,3 · · · ·) WITH A SAME PRIORITY AS PRIORITY x ?    t6

**No** →

TASK SELECTION DATA GENERATED    t8

PRIORITY MANAGEMENT LABEL GENERATED FOR SET PRIORITY    t9

TASK SELECTION DATA SET TO CORRESPOND TO GENERATED PRIORITY MANAGEMENT LABEL    t10

GENERATED PRIORITY MANAGEMENT LABEL ADDED TO EXISTING PRIORITY MANAGEMENT LABELS    t17

**Yes** ↓

GENERATED TASK SELECTION DATA ADDED TO END OF SELECTION LIST OF PRIORITY MANAGEMENT LABEL FOR THAT PRIORITY    t7

SET PRIORITY ADDED TO PRIORITY TOTAL    t18

```
                        ┌─────────┐
                        │   END   │
                        └─────────┘
```

## FIG. 15

START

t11

LINK FROM FINAL TASK SELECTION DATA p=P TO REVERSE ORDER
LINK OF PRIORITY MANAGEMENT LABEL MARKER DELETED

t12

LINK ESTABLISHED FROM TASK SELECTION DATA p=P
TO TASK SELECTION DATA p=P+1

t13

LINK ESTABLISHED FROM TASK SELECTION DATA p=P+1
TO REVERSE ORDER LINK OF PRIORITY MANAGEMENT
LABEL MARKER

END

## FIG. 16

START

t14

LINK FROM PRIORITY MANAGEMENT LABEL P=N
TO REVERSE ORDER LINK OF PRIORITY MANAGEMENT LABEL MARKER DELETED

t15

LINK ESTABLISHED FROM PRIORITY MANAGEMENT LABEL p=N
TO PRIORITY MANAGEMENT LABEL p=N+1

t16

LINK ESTABLISHED FROM PRIORITY MANAGEMENT LABEL p=N+1
TO REVERSE ORDER LINK OF PRIORITY MANAGEMENT LABEL MARKER

END

## FIG. 17A

Psum=28

r=8

P₁=10    P₂=3    P₃=15

ID=1 / Task Data    ID=1 / Task Data    ID=1 / Task Data    ID=1 / Task Data    ID=1 / Task Data    ID=1 / Task Data

106a    106b    106c    106d    106e    106f

## FIG. 17B

Psum=28

r=8

P₁=10    P₂=3    P₃=15

y1    y2    y3

ID=1 / Task Data    ID=1 / Task Data    ID=1 / Task Data    ID=1 / Task Data    ID=1 / Task Data    ID=1 / Task Data

106a    106b    106c    106d    106e    106f

## FIG. 17C

Psum=28

r=8

P₁=10    P₂=3    P₃=15

y6

y4    y5

ID=1 / Task Data    ID=1 / Task Data    ID=1 / Task Data    ID=1 / Task Data    ID=1 / Task Data    ID=1 / Task Data

106b    106c    106d    106e    106f    106a

## FIG. 18

y15
y16

ID=1 Pr=15 Application 1

ID=2 Pr=5 Application 2

ID=3 Pr=5 Application 3

⋮

ID=8 Pr=5 Application 8

ID=9 Pr=5 Application 9

ID=10 Pr=4 Application 10

ID=11 Pr=4 Application 11

⋮

ID=18 Pr=4 Application 18

ID=19 Pr=4 Application 19

ID=20 Pr=3 Application 20

ID=21 Pr=3 Application 21

ID=22 Pr=3 Application 22

ID=23 Pr=3 Application 23

⋮

ID=28 Pr=3 Application 28

ID=29 Pr=3 Application 29

⋮

y11
y12
y13
y14

P=15
P=5
P=4
P=3

y17

ID=1 Task Data
ID=2 Task Data

ID=3 Task Data
ID=4 Task Data

y18

ID=8 Task Data
ID=9 Task Data

ID=10 Task Data
ID=11 Task Data

ID=20 Task Data
ID=21 Task Data

ID=22
ID=23

# FIG. 19

# FIG. 20

## FIG. 21A

## FIG. 21B

## FIG. 22A

P=1  P=2  P=3  P=N-1  P=N

ID=1 Task Data  ID=2 Task Data  ID=3 Task Data  ID=4 Task Data  ID=P-1 Task Data  ID=P Task Data

## FIG. 22B

y31

P=1  P=2  P=3  P=N-1  P=N  P=N+1

ID=1 Task Data  ID=2 Task Data  ID=3 Task Data  ID=4 Task Data  ID=P-1 Task Data  ID=P Task Data  ID=P+1 Task Data

## FIG. 22C

y32

P=1  P=2  P=3  P=N  P=N+1

ID=1 Task Data  ID=2 Task Data  ID=3 Task Data  ID=4 Task Data  ID=P-1 Task Data  ID=P Task Data  ID=P+1 Task Data

FIG. 23

## FIG. 24

104        10C

Pa =      1403

Pb =      1404

1405

140E        140F

## FIG. 25

ID =      107

140a

108

## FIG. 26

START

**S1501**
TASK SELECTION DATA WHOSE EXECUTION TIME IS IMMINENT DETECTED FROM EACH PRIORITY MANAGEMENT LABEL. TASK SELECTION DATA POINTER POSITIONED AT DETECTION POSITIONS. EFFECTIVE PRIORITY IN CORRESPONDING PRIORITY MANAGEMENT LABEL UPDATED.

**S1502**
TOTAL OF EFFECTIVE PRIORITIES OF PRIORITY MANAGEMENT LABELS CALCULATED

**S1503**
IS EFFECTIVE PRIORITY GREATER THAN 0 ? — N

**S1505**
SYSTEM INFORMED THAT THERE IS NO TASK TO BE EXECUTED

Y

**S1001**
UNIFORM RANDOM NUMBER GENERATED BETWEEN ZERO AND TOTAL OF EFFECTIVE PRIORITY. SUBSTITUTED INTO VARIABLE r

**S1002**
ZERO SUBSTITUTED INTO VARIABLE x

**S1003**
FIRST PRIORITY MANAGEMENT LABEL j=1 IN MANAGEMENT LIST (j=0, 1, 2, 3 ...) INDICATED USING POINTER 3

**S1004**
END OF LIST ? — Y

**S1005**
PRIORITY OF PRIORITY MANAGEMENT LABEL INDICATED BY POINTER 3 ADDED TO VARIABLE x

N

**S1006**
IS VARIABLE x ≧ VARIABLE r ? — Y

N **S1007**
POINTER 3 ADVANCED TO NEXT LABEL

**S1008**
PRIORITY MANAGEMENT LABEL INDICATED BY POINTER 3 SELECTED

**S150D**
CONTEXT OF TASK SELECTION DATA INDICATED BY DEADLINE POINTER SENT TO PROCESSOR

**S160C**
TASK SELECTION DATA SUBSTITUTED INTO DEADLINE POINTER MOVED TO END OF SELECTION LIST

END

## FIG. 27

```
            ( START )
                |
┌───────────────────────────────────┐   S1601
│ PRIORITY MANAGEMENT LABEL POSITIONED│
│ AT START OF MANAGEMENT LIST INDICATED│
│ USING POINTER 1                     │
└───────────────────────────────────┘
                |
                ↓                        S1602
┌───────────────────────────────────┐
│ TASK SELECTION DATA AT START        │
│ OF SELECTION LIST MANAGED BY         │
│ PRIORITY MANAGEMENT LABEL            │
│ INDICATED USING POINTER 2            │
└───────────────────────────────────┘
                |
                ↓                        S1603
┌───────────────────────────────────┐
│ REQUIRED TIME FOR TASK SELECTION     │
│ DATA INDICATED BY POINTER 2          │
│ SUBSTITUTED INTO VARIABLE t          │
└───────────────────────────────────┘
                |
                ↓                        S1604
        ╱ IS t BEFORE OR AFTER ╲    N
        ╲   PRESENT TIME ?      ╱ ─────────────────┐
                | Y                                 │
                ↓                        S1605      │
┌───────────────────────────┐                      │   S1608
│ POINTER 2 ADVANCED          │           ┌──────────────────────────┐
│ TO NEXT ELEMENT             │           │ STANDARD PRIORITY          │
└───────────────────────────┘           │ COPIED INTO EFFECTIVE      │
                |         N               │ PRIORITY OF PRIORITY       │
                ↓      S1606              │ MANAGEMENT LABEL           │
        ╱ END OF LIST ? ╲ ──────┐        │ INDICATED BY POINTER 1     │
                | Y              │        └──────────────────────────┘
                ↓      S1607     │                    |  S1609
┌───────────────────────────┐   │        ┌──────────────────────────┐
│ ZERO SUBSTITUTED INTO EFFECTIVE│       │ TASK SELECTION DATA        │
│ PRIORITY OF TASK MANAGEMENT     │       │ INDICATED BY POINTER 2     │
│ DATA INDICATED BY POINTER 1     │       │ ALSO INDICATED BY          │
└───────────────────────────┘   │        │ DEADLINE POINTER OF        │
                |                │        │ PRIORITY MANAGEMENT        │
                ↓                │        │ LABEL                      │
┌───────────────────────────┐ S160A      └──────────────────────────┘
│ POINTER 1 ADVANCED          │                    |
│ TO NEXT ELEMENT             │                    │
└───────────────────────────┘                    │
                |      S160B                        │
                ↓                                   │
        ╱ END OF LIST ? ╲ ──────────────────────────┘
            N  |  Y
               ↓
            ( END )
```

# FIG. 28A

EP 0 790 557 A2

# FIG. 28B

EP 0 790 557 A2

Psum=3
0~Pb1+Pb2+Pb3

Ras=3
0~Psum-1

T=02 : 00

1402a — Pa=3 / Pb1=3

1402b — Pa=15 / Pb2=0

1402c — Pa=10 / Pb3=0

ID=2 / 02:00 / Task Data — 1408b

ID=3 / 03:00 / Task Data — 1408c

ID=4 / 04:00 / Task Data — 1408d

ID=5 / 05:00 / Task Data — 1408e

ID=6 / 06:00 / Task Data — 1408f

ID=7 / 07:00 / Task Data — 1408g

ID=8 / 08:00 / Task Data — 1408a

ID=1 / 01:00 / Task Data — 1408a

ID=20 / t=03:00 / Task Data — 1408i

ID=11 / 04:00 / Task Data — 1408j

ID=12 / 08:00 / Task Data — 1408k

ID=13 / 12:00 / Task Data — 1408l

ID=14 / 16:00 / Task Data — 1408m

ID=15 / 20:00 / Task Data — 1408n

ID=16 / 24:00 / Task Data — 1408s

FIG. 28C

## FIG. 28D

EP 0 790 557 A2